# EUROPÄISCHE PATENTSCHRIFT

(11) **EP 3 899 166 B1**
(45) Veröffentlichungstag und Bekanntmachung des Hinweises auf die Patenterteilung: **07.06.2023**
(21) Anmeldenummer: 19817334.6
(22) Anmeldetag: 13.12.2019
(51) Int. Cl.: E04G 9/05, B33Y 80/00, B29C 64/00, E04G 9/02

(54) **ANORDNUNG MIT SCHALUNGSSYSTEM UND UNTERKONSTRUKTION**
ARRANGEMENT WITH FORMWORK SYSTEM AND SUBSTRUCTURE
DISPOSITION AVEC SYSTÈME DE COFFRAGE ET OSSATURE

(30) Priorität: 17.12.2018 EP 18213217
(43) Veröffentlichungstag der Anmeldung: 27.10.2021
(73) Patentinhaber: BASF SE, 67056 Ludwigshafen am Rhein (DE)
(72) Erfinder: SCHACHT, Maik, 67059 Ludwigshafen (DE); WUEST, Andreas, 67056 Ludwigshafen (DE); LEIBE, Robert, 69115 Heidelberg (DE); RASHEED, Sufyan, 69115 Heidelberg (DE)
(74) Vertreter: BASF IP Association
(86) Internationale Anmeldenummer: PCT/EP2019/085103
(87) Internationale Veröffentlichungsnummer: WO 2020/126913

(56) Entgegenhaltungen:
- WO-A1-2011/035649
- WO-A1-2011/070530
- CN-A- 105 926 935
- CN-A- 108 797 892
- DE-A1-102013 107 303
- KR-B1- 101 539 186

## Beschreibung

Die vorliegende Erfindung betrifft eine Anordnung mit einem Schalungssystem (1) umfassend eine Schalhaut (2) und mindestens ein Formelement (10), das an der Rückseite (4) der Schalhaut (2) angebracht ist, und einer Unterkonstruktion.

Die Schalhaut (2) und das Formelement (10) sind mit einem 3D-Druckverfahren hergestellt worden. Dies wird vorzugsweise in einem gemeinsamen 3D-Druckprozess durchgeführt, die Schalhaut (2) und das Formelement (10) können aber auch in getrennten 3D-Druckprozessen hergestellt werden, wobei anschließend das Formelement (10) an der Rückseite (4) der Schalhaut (2) angebracht wird. Dies erfolgt unter Verwendung von mindestens einem ersten Befestigungselement (50). Sofern hingegen die Schalhaut (2) und das Formelement (10) in einem gemeinsamen 3D-Druckprozess hergestellt worden sind, ist keine zusätzliche Verwendung eines ersten Befestigungselements (50) zur Befestigung des Formelements (10) an der Schalhaut (2) erforderlich. Erfindungsgemäß sind das Formelement (10) und gegebenenfalls das erste Befestigungselement (50) so an der Rückseite (4) der Schalhaut (2) angebracht, dass sie die Vorderseite (3) der Schalhaut (2) nicht berühren oder durchstoßen. Weiterhin betrifft die vorliegende Erfindung die Verwendung einer solchen Anordnung bei der Herstellung von Bauelementen aus Beton.

Schalungen für die Herstellung von Bauelementen aus Beton müssen aufgrund der hohen Dichte von Beton große Innendrücke mit kleinen Verformungen ertragen können. Zusätzlich bestehen hohe Anforderungen an eine möglichst ungestörte, gleichmäßige Oberfläche auf dem herzustellenden Betonbauelement mit einer gewünschten, idealerweise unterbrechungsfreien Textur. Eine homogene, ungestörte Schalungsoberfläche ohne sichtbare Befestigungselemente wie Schrauben reduziert den Aufwand für die Nachbearbeitung der Schalung und der Betonfertigteile. In der Praxis werden die Schalungssysteme in der Regel an eine Unterkonstruktion befestigt, wobei beispielsweise Schrauben oder sonstige Befestigungselemente, ausgehend von der dem Beton zugewandten Seite der Schalung, durch diese hindurchgetrieben werden, um eine Befestigung an der entsprechenden Unterkonstruktion zu erzielen. Diese in der Praxis weitverbreitete Methode hat jedoch den entscheidenden Nachteil, dass die eingesetzten Befestigungselemente auf der Oberfläche des herzustellenden Betonbauelements gut sichtbar sind, was eine Nachbearbeitung erfordert. Sofern beispielsweise die eingesetzten Schrauben an ihren Köpfen mit Spachtelmasse versehen werden, sind im entsprechenden Betonbauelement weiterhin Flecken an der Oberfläche und/oder unerwünschte Verformungen/Vertiefungen zu erkennen.

WO 95/02101 offenbart ein klassisches Schalungssystem (dort als Schalttafel bezeichnet), bei dem auf der dem Beton abgewandten Seite der Schalhaut ein abstützender Träger, der einen etwa U-förmigen Querschnitt aufweist, aufgebracht ist. In WO 95/02101 sind keine konkreten Hinweise enthalten, aus welchem Material bzw. nach welchem Verfahren die Schalhaut hergestellt ist. Der abstützende Träger mit einem etwa U-förmigen Querschnitt kann beispielsweise aus Blech hergestellt werden.

DE-A 10 2016 119 365 betrifft ein modulares Schalungssystem für die Herstellung von Betonelementen. In den zugehörigen Figuren ist unter anderem dargestellt, wie in der Praxis ein Betonelement hergestellt wird, wobei zunächst ein Schalungssystem maßgeschneidert herzustellen ist und das Schalungssystem wiederum an einer Stütz- bzw. Unterkonstruktion befestigt werden muss. Die in der Praxis häufig verwendeten Schalungstafeln aus Aluminium werden dort als nachteilig aufgrund der Texturproblematik auf der Betonoberfläche beschrieben. Das dort offenbarte modulare Schalungssystem setzt sich stattdessen aus einer Mehrzahl von Einzelformen zusammen, wobei die Einzelformen zumindest auf der dem Beton zugewandten Oberfläche aus einem schichtweise ausgehärteten Kunststoff hergestellt sind. Diese Oberfläche ist wiederum auf (einzelnen) Grundplatten aufgebracht, die beispielsweise aus Aluminium gefertigt sein können. Dieses aus einer Vielzahl von Einzelformen zusammengesetzte modulare Schalungssystem wird wiederum in der praktischen Anwendung auf der Rückseite, also auf der dem Beton abgewandten Seite, an ein Gerüst bzw. eine Unterkonstruktion befestigt. Hierzu dienen in der Regel Vorrichtungen zur Fixierung der Einzelelemente, die auf der Rückseite der beispielsweise aus Aluminium hergestellten Grundplatten separat angebracht sind.

CN 105 926 935 A offenbart eine integrierte Säulenschablone für den Betoneinbau auf Basis des 3D-Drucks, wobei es sich bei der integrierten Säulenschablone um eine durch den 3D-Druck gebildete Rohrstruktur handelt, die aus einer Rohrwand und gegebenenfalls Verstärkungsrippen besteht.

KR 101 539 186 B1 betrifft eine Schalungsanordnung zum Gießen von Beton mit einer bestimmten Außenfläche, die einen Rahmen, sowie der Außenfläche des zu gießenden Betons entsprechende Gegenstücke umfasst.

CN 108 797 892 A offenbart eine mit einem Glasfasernetz verstärkte frei entfernbare Betonsäulenform, wobei die Säulenform eine hohle ultrahochleistungsfähige Betonschicht und ein Glasfasernetz enthält. DE 10 2013 107303 A1 offenbart eine Anordnung aus einem Schalungssystem mit Schalhaut und rückseitig angebrachten Formelementen. Das Schalungssystem ist an einer Unterkonstruktion angebracht.

Die der vorliegenden Erfindung zugrunde liegende Aufgabe besteht in der Bereitstellung einer neuen Anordnung unter Verwendung eines Schalungssystems, das zur Herstellung von Bauelementen aus Beton geeignet ist.

Gelöst wird die Aufgabe durch eine Anordnung mit den Merkmalen des Anspruchs 1.

Ein wesentlicher Vorteil der erfindungsgemäßen Anordnung ist darin zu sehen, dass das Schalungssystem eine sehr hohe Flexibilität hinsichtlich der Art und Weise der Verbindung an die Unterkonstruktion aufweist. So können unterschiedliche Dehnungs- bzw. Schrumpfungsverhalten der jeweils verwendeten Werkstoffe aufgrund von Temperaturextremen wie Hitze oder Kälte auf einfache Art und Weise ausgeglichen werden.

Ein weiterer wesentlicher Vorteil ist darin zu sehen, dass bei dem herzustellenden Betonbauelement eine ungestörte und/oder gleichmäßige Oberfläche mit einer gewünschten, idealerweise unterbrechungsfreien Textur auf einfache Art und Weise hergestellt werden kann. Dies wird insbesondere dadurch erzielt, dass im Schalungssystem (1) die komplette Schalhaut (2) sowie die Formelemente (10) durch ein 3D-Druckverfahren hergestellt worden sind. In vorteilhafter Weise werden die komplette Schalhaut (2) und/oder die Formelemente (10) jeweils durch einen einzelnen 3D-Druckprozess hergestellt. Die einzelnen Elemente des Schalungssystems (1) müssen also nicht mehr aus mehreren Einzelelementen umständlich zusammengesetzt werden, wie es beispielsweise in dem Verfahren gemäß DE-A 10 2016 119 365 erforderlich ist. Die Schalungssysteme (1) lassen sich besonders einfach herstellen sofern die Schalhaut (2) und das mindestens eine Formelement (10) in einem gemeinsamen 3D-Druckprozess hergestellt worden sind.

Die 3D-gedruckten Schalungssysteme (1) eignen sich gezielt zur Erstellung von besonders komplexen geometrischen Bauelementen, die mit herkömmlichen Schalungselementen (wie beispielsweise Platte, Rohr, Wachs oder Polyurethan-Schäumen) nicht oder nur mit einem sehr hohen Aufwand per Hand oder mit CNC-Fräsen herstellbar sind. Die Schalungssysteme weisen zudem in der Regel eine geringere Masse und/oder Herstellungszeit auf, da sie in Form von relativ dünnen Schalhäuten (beispielsweise 1 bis 20 mm Dicke) hergestellt werden können. Die vorzugsweise dünnwändigen Schalungssysteme sind auf einfache und flexible Weise an eine entsprechende Unterkonstruktion aus steifen, lasttragenden Elementen wie Holz-Gitterkonstruktionen angebracht, um auf diese Weise hohe Drücke beim Gießen oder Verdichten des Füllmediums (insbesondere Beton) ohne unzulässige/nennenswerte Deformationen aushalten zu können.

Die Schalungssysteme müssen aufgrund ihrer flexiblen Handhabbarkeit auch nicht mehr mit der Unterkonstruktion verklebt werden, was in der Praxis nach wie vor eine weitverbreitete Methode ist. Dieses Verkleben ist meist sehr teuer, zeitaufwändig und bringt mit dem Klebstoff ein neues, eventuell später gesondert zu entsorgendes Medium in den Herstellprozess ein. Zudem müssen relativ große Mengen an Klebstoff eingesetzt werden, um eine stabile Verbindung zu erzielen. Weiterhin ist eine spätere Demontage erschwert.

Ebenso wenig ist mit den Schalungssystemen ein Verschrauben von der Innenseite (der dem Beton zugewandten Seite) des Schalungssystems an die Unterkonstruktion erforderlich, wie es in der Praxis als Alternative zum Verkleben durchgeführt wird. Demzufolge ermöglicht die Anwendung des Schalungssystems, dass bei dem herzustellenden Betonfertigteil keine Schraubenköpfe, Löcher oder sonstige Führungen auf der Schalhautoberfläche auf dem herzustellenden Betonfertigteil abgezeichnet werden. Eine Störung der Oberfläche/Textur des Betonfertigteils wird somit unterbunden bzw. es müssen im Anschluss keine zusätzlichen Verfüllungs- und/oder Glättungsmaßnahmen am hergestellten Betonfertigteil durchgeführt werden. Hierbei ist auch zu berücksichtigen, dass in diesem Zusammenhang etwaige zu verwendende Füllmaterialeien ein anderes Saugverhalten haben als die Schalmaterialien, was ebenfalls zu einer sichtbaren Störung auf der Betonoberfläche führt. Dies ist insbesondere bei Sichtbetonanwendungen entscheidend.

Nachfolgend wird das Schalungssystems der erfindungsgemäßen Anordnung näher definiert.

Ein erster Gegenstand der vorliegenden Erfindung ist eine Anordnung gemäß Anspruch 1, umfassend ein Schalungssystem (1) umfassend
- eine Schalhaut (2), die eine Vorderseite (3) und eine Rückseite (4) aufweist,
- mindestens ein Formelement (10), das an der Rückseite (4) der Schalhaut (2) angebracht ist,
wobei i) die Schalhaut (2) und das Formelement (10) mit einem 3D-Druckverfahren hergestellt worden sind, ii) das Formelement (10) gegebenenfalls unter Verwendung von mindestens einem ersten Befestigungselement (50) an der Rückseite (4) der Schalhaut (2) angebracht ist und iii) das Formelement (10) und gegebenenfalls das erste Befestigungselement (50) so an der Rückseite (4) der Schalhaut (2) angebracht sind, dass das Formelement (10) und das gegebenenfalls verwendete erste Befestigungselement (50) die Vorderseite (3) der Schalhaut (2) nicht berühren oder durchstoßen.

3D- (dreidimensionale) Druckverfahren als solche sind dem Fachmann bekannt. Erfindungsgemäß können prinzipiell alle bekannten unterschiedlichen 3D-Drucktechniken, wie beispielsweise selektives Laserschmelzen, Elektronenstrahlschmelzen, selektives Lasersintern, Stereolithographie oder das Fused Deposition Modeling (FDM)-Verfahren angewandt werden. Sinngemäßes gilt auch für die entsprechenden Ausgangsmaterialen wie Pulver oder Filamente, die in den jeweiligen 3D-Druckverfahren Schicht für Schicht aufgetragen werden, um so den gewünschten dreidimensionalen (3D) Gegenstand herzustellen.

Erfindungsgemäß wird das komplette Schalungssystem (1) umfassend eine Schalhaut (2) sowie mindestens ein Formelement (10) mit einem 3D-Druckverfahren hergestellt. Darüber hinaus können auch einzelne Funktionselemente (40) ebenso mit einem 3D-Druckverfahren hergestellt werden. Allerdings ist es auch möglich, dass im Schalungssystem (1) einzelne Formelemente, Funktionselemente oder sonstige Gegenstände nicht mit einem 3D-Druckvrfahren hergestellt worden sind. Beispielsweise kann das Schalungssystem (1) neben mindestens einem Formelement (10), das an der Rückseite (4) der Schalhaut (2) angebracht ist und das mit einem 3D-Druckverfahren hergestellt worden ist, auch weitere Formelemente umfassen, die nicht nach einem 3D-Druckverfahren hergestellt worden sind. Die ersten und zweiten Befestigungselemente (20/50) oder die Unterkonstruktion (30) werden erfindungsgemäß in der Regel nicht mit einem 3D-Druckverfahren hergestellt, weil dies zu aufwändig wäre. Theoretisch ist es aber auch möglich, solche Gegenstände ebenfalls mit einem 3D-Druckverfahren herzustellen.

Erfindungsgemäß ist es bevorzugt, dass die jeweiligen Elemente des Schalungssystems (1), die mit einem 3D-Druckverfahren hergestellt werden, also insbesondere die Schalhaut (2) sowie das mindestens eine Formelement (10), jeweils durch einen einzigen 3D-Druckprozess hergestellt werden. In anderen Worten ausgedrückt bedeutet dies, dass es erfindungsgemäß bevorzugt ist, dass die jeweiligen Komponenten des erfindungsgemäßen Schalungssystems (1), die mit einem 3D-Druckverfahren hergestellt worden sind, jeweils an einem Stück hergestellt werden und nicht aus unterschiedlichen Teilstücken bestehen, die anschließend aufwändig zusammengefügt werden müssen.

In einer besonders bevorzugten Ausführungsform der vorliegenden Erfindung ist das Schalungssystem (1) derart ausgestaltet, dass die Schalhaut (2) und das mindestens eine Formelement (10) in einem gemeinsamen 3D-Druckprozess hergestellt worden sind.

Erfindungsgemäß ist es jedoch möglich, dass die Schalhaut (2) sowie das mindestens eine Formelement (10) jeweils in getrennten 3D-Druckprozessen hergestellt werden, vorzugsweise werden die Schalhaut (2) und das mindestens eine Formelement (10) in einem gemeinsamen 3D-Druckprozess hergestellt.

Sofern im Schalungssystem (1) die Schalhaut (2) und das mindestens eine Formelement (10) jeweils in getrennten 3D-Druckprozessen hergestellt worden sind, wird das Formelement (10) anschließend unter Verwendung von mindestens einem ersten Befestigungselement (50) an der Rückseite (4) der Schalhaut (2) angebracht. Als erstes Befestigungselement (50) eignen sich hierbei prinzipiell die gleichen Befestigungselemente wie nachfolgend als zweites Befestigungselement (20) beispielsweise für das Anbringen des Schalungssystems (1) an die Unterkonstruktion (30) im Detail erläutert. Als erste Befestigungselemente (50) ist zusätzlich auch die Verwendung von dem Fachmann bekannten Klebstoffen geeignet, die hingegen beim Anbringen des Schalungssystems (1) und der Unterkonstruktion (30) erfindungsgemäß weniger geeignet sind.

Sofern erste Befestigungselemente (50) zum nachträglichen Anbringen der Formelemente (10) auf der Schalhaut (2) verwendet werden, ist darauf zu achten, dass weder das erste Befestigungselement (50) noch das Formelement (10) die Vorderseite (3) - also die Innenseite bzw. die bei der praktischen Anwendung dem Beton zugewandte Seite - der Schalhaut (2) berührt oder sie durchstößt/zerstört. Demzufolge ist es für diese Ausführungsform der vorliegenden Erfindung sinnvoll, auf der Rückseite (4) der Schalhaut (2) zusätzlich einen oder mehrere Dome während des 3D-Druckvorgangs aufzudrucken, um eine Zerstörung der Vorderseite (3) der Schalhaut (2), insbesondere durch die Verwendung von ersten Befestigungselementen (50), zu vermeiden.

In dieser Ausführungsform ist es bevorzugt, dass das mindestens eine Formelement (10) durch Verkleben, Verschrauben, Vernageln und/oder Vernieten auf der Rückseite (4) der Schalhaut (2) angebracht wird und/oder als erstes Befestigungselement (50) Klebstoff, Schrauben, Nägel und/oder Nieten verwendet werden. Besonders bevorzugt erfolgt dies durch Verschrauben und/oder als erstes Befestigungselement (50) werden Schrauben verwendet.

Der Vollständigkeit halber wird darauf hingewiesen, dass in der bevorzugten Ausführungsform der vorliegenden Erfindung, in der die Schalhaut (2) und das mindestens eine Formelement (10) in einem gemeinsamen 3D-Druckprozess hergestellt worden sind, das Merkmal, wonach das Formelement (10) die Vorderseite (3) der Schalhaut (2) nicht berührt oder durchstößt, bereits automatisch erfüllt ist, weil die Schalhaut (2) und das mindestens eine Formelement (10) gemeinsam und nicht voneinander trennbar das Schalungssystem (1) ausbilden. Ein nachträgliches Anbringen des Formelementes (10) auf die Rückseite (4) der Schalhaut (2) unter Verwendung von mindestens einem ersten Befestigungselement (50), wodurch auch die Vorderseite (3) der Schalhaut (2) berührt oder durchstoßen werden kann, ist somit nicht mehr erforderlich. In anderen Worten ausgedrückt bedeutet dies, dass die entsprechenden Formelemente (10) bereits direkt auf eine Seite der Schalhaut (2) aufgedruckt werden, wobei diese Seite per Definitionem die Rückseite (4) ist, also die bei der Anwendung dem Beton abgewandte Seite.

In allen Ausführungsformen der vorliegenden Erfindung ist weiterhin die Vorderseite (3) der Schalhaut (2) bevorzugt vollständig frei von irgendwelchen Formelementen (10), ersten und zweiten Befestigungselementen (20/50) oder sonstigen Elementen wie Funktionselementen (40). Weiterhin wird unabhängig von der konkreten Ausführungsform die Vorderseite (3) der Schalhaut (2) von keinen sonstigen ersten und zweiten Befestigungselementen (20/50) oder Funktionselementen (40) berührt oder durchstoßen. Sofern beispielsweise Funktionselemente (40) und/oder Teile der Unterkonstruktion (30) über erste und zweite Befestigungselemente (20/50) in irgendeiner Form mit den auf der Rückseite (4) der Schalhaut (2) angebrachten Formelemente (10) verbunden werden, berührt oder durchstößt keines dieser Elemente die Vorderseite (3) der Schalhaut (2).

Im Schalungssystem (1) können sowohl die Schalhaut (2) als auch das mindestens eine Formelement (10) beliebige Geometrien und/oder Größen (Dimensionen) aufweisen. Die genaue Größe und/oder Form/Geometrie wird letztendlich durch die konkrete Anwendung, also die konkrete Ausgestaltung des herzustellenden Betonformteils vom Fachmann bestimmt. Hierzu wendet der Fachmann vorteilhaft eine entsprechende Computersteuerung bzw. ein Computerprogramm an. Je größer die Form/der Umfang der Schalhaut (2) im erfindungsgemäßen Schalungssystem (1) ist, umso mehr Formelemente (10) wird der Fachmann auf der Rückseite (4) der Schalhaut (2) anbringen, um eine möglichst stabile Anbringung des Schalungssystems (1) an der entsprechenden Unterkonstruktion (30) zu ermöglichen. Insbesondere bei sehr kleinen Betonformteilen ist es theoretisch möglich, dass bereits ein einziges Formelement (10) ausreichend ist. In der Praxis können die erfindungsgemäßen Schalungssysteme (1) jedoch auch eine Vielzahl von Formelementen (10) aufweisen, beispielsweise 2, 5, 10, 50, 100 oder noch mehr. Die Geometrie und/oder Größe der einzelnen Formelemente (10) kann gleich oder verschieden sein, vorzugsweise sind alle Formelemente (10) erfindungsgemäß gleich hinsichtlich ihrer Größe und/oder Geometrie.

Im Schalungssystem (1) weist die Schalhaut (2) in der Praxis in der Regel eine durchschnittliche Dicke von 1 bis 20 mm, bevorzugt von 3 bis 8 mm auf. Diese Dickenwerte können jedoch durchaus auch unter- bzw. überschritten werden. Beispielsweise ist es bei einzelnen Anwendungen auch sinnvoll, einzelne Bereiche der Schalhaut dicker auszugestalten als andere Bereiche.

Die Schalhaut als solche und/oder das Formelement (10) als solches sind dem Fachmann bekannt. Sie können aus beliebigen dem Fachmann bekannten Materialien hergestellt werden, die sich im Rahmen eines 3D-Druckverfahrens verarbeiten lassen. Als Formelement (10) im Sinne der vorliegenden Erfindung wird prinzipiell das Element verstanden, das über geeignete erste und zweite Befestigungselemente (20/50) den Kraft- bzw. Formschluss zwischen der Schalhaut (2) und der Unterkonstruktion (30) ermöglicht. Bevorzugt ist das Formelement (10) dabei einstückig mit der Schalhaut (2) bereits im gleichen 3D-Druckprozess entstanden. Geeignete Formelemente (10) im Sinne der vorliegenden Erfindung können beispielsweise eine Öffnung, ein Schlitz, eine Aussparung, ein Vorsprung, eine Verstärkungsrippe oder eine Rastnase sein.

In der vorliegenden Erfindung ist ein Formelement (10) bevorzugt, das
i) mindestens eine Öffnung (11), vorzugsweise in Form eines runden Lochs, eines Schlitzes oder einer Aussparung aufweist, und/oder
ii) mindestens eine Rastnase (13) aufweist, und/oder
iii) mindestens eine Verstärkungsrippe (12) aufweist.

Erfindungsgemäß ist das Schalungssystem (1) an die Unterkonstruktion (30) bzw. einen Teilbereich davon, angebunden. Dies erfolgt unter Verwendung von mindestens einem zweiten Befestigungselement (20). Die Befestigung bzw. Anbindung kann nach allen dem Fachmann bekannten Methoden durchgeführt werden.

Bei der erfindungsgemäßen Anordnung ist das Schalungssystem (1) unter Verwendung von mindestens einem zweiten Befestigungselement (20) an mindestens einem Teilbereich einer Unterkonstruktion (30) befestigt, wobei die Unterkonstruktion (30) vollständig, aus Holz hergestellt ist. Insbesondere ist die Unterkonstruktion (30) eine Holzgitterkonstruktion oder eine Knaggenkonstruktion.

In einer Ausführungsform der vorliegenden Erfindung wird ein Schalungssystem (1) eingesetzt, wobei mindestens ein Formelement (10) mindestens eine Öffnung (11), vorzugsweise ein rundes Loch oder einen Schlitz, aufweist und mindestens ein erstes zweites Befestigungselement (20), vorzugsweise ein Draht (21), ein Seil oder ein Stahlband, insbesondere ein Draht (21), mit einem Teilbereich in die Öffnung (11) eingelegt oder teilweise durchgezogen wird und das erste zweite Befestigungselement (20) mit einem anderen Teilbereich unter Verwendung von mindestens einem zweiten zweiten Befestigungselement (20), vorzugsweise einer Schraube oder einem Nagel, an der Unterkonstruktion (30) befestigt ist.

In einer alternativen Ausführungsform der vorliegenden Erfindung weist mindestens ein Formelement (10) mindestens eine Öffnung (11) auf und das Formelement (10) ist unter Verwendung von mindestens einem ersten zweiten Befestigungselement (20) an der Unterkonstruktion (30) befestigt, wobei
i) die Befestigung des ersten zweiten Befestigungselements (20) gegebenenfalls unter Verwendung von mindestens einem zweiten zweiten Befestigungselement (20), vorzugsweise einer Schraube (22) oder eines Nagels, an der Unterkonstruktion (30) befestigt ist und/oder
ii) das erste zweite Befestigungselement (20) vorzugsweise ein Lochband (27) ist und das Lochband (27) gegebenenfalls unter Verwendung eines Bolzens (26) am Formelement (10) befestigt ist.

Erfindungsgemäß kann die Befestigung eines Teilbereichs des Schalungssystems (1) an einen Teilbereich der Unterkonstruktion (30) entweder einfach oder auch mehrfach, beispielsweise durch eine doppelseitige Verbindung, erfolgen. Doppelseitige Verbindungen sind häufig bevorzugt, weil auf diese Weise eine sehr stabile, insbesondere formschlüssige Anbindung des Schalungssystems (1) an den entsprechenden Teilbereich der Unterkonstruktion (30) erfolgen kann. So ist erfindungsgemäß ein Schalungssystem (1) bevorzugt, bei dem auf der Rückseite (4) der Schalhaut (2) mindestens ein erstes Formelement (10) und ein zweites Formelement (10) angebracht sind, um eine doppelseitige Verbindung mit einem Teilbereich der Unterkonstruktion (30) herzustellen, wobei vorzugsweise die Anordnung von erstem zu zweitem Formelement (10) symmetrisch, vorzugsweise spiegelbildlich, (relativ zur Positionierung der Unterkonstruktion (30)) ist.

In einer bevorzugten Ausführungsform ist das erste und zweite Formelement (10) jeweils mit einem Teilbereich eines einzelnen zweiten Befestigungselements (20) verbunden und ein weiterer Teilbereich dieses zweiten Befestigungselements (20) an der Unterkonstruktion (30) befestigt, wobei vorzugsweise
i) die Unterkonstruktion (30) mindestens eine Öffnung und/oder Aussparung aufweist, durch die das zweite Befestigungselement (20) durchgezogen oder teilweise eingelegt ist, und/oder
ii) das zweite Befestigungselement (20) ein Band, Seil oder Lochband ist, und/oder
iii) das zweite Befestigungselement (20) zusätzlich über einen Spannmechanismus (24), insbesondere über einen Exzenter, verfügt.

Wie vorstehend bereits erwähnt, kann das Schalungssystem (1) über mindestens ein Formelement (10) auch mit einem Funktionselement (40) verbunden werden, wobei das Funktionselement (40) gegebenenfalls mit einem 3D-Druckverfahren hergestellt werden kann. Bevorzugt werden Funktionselemente (40) jedoch nicht mit einem 3D-Druckverfahren hergestellt, sondern als Ergänzung, Teilmenge oder Bestandteil der Unterkonstruktion (30) aufgefasst, hergestellt und/oder mit dieser verbunden. Funktionselemente als solche sind dem Fachmann bekannt. Hierbei handelt es sich insbesondere um solche Vorrichtungselemente, wie sie nachfolgend in den Figuren wiedergegeben sind.

Bevorzugte Schalungssysteme (1) der vorliegenden Erfindung sind derart ausgestaltet, dass mindestens ein Formelement (10) mit einem Funktionselement (40) verbunden ist, vorzugsweise weist das Formelement (10) mindestens eine Öffnung (11) auf, mehr bevorzugt ist die Öffnung (11) in Form einer Aussparung, insbesondere in Form eines Schwalbenschwanzes, und/oder das Funktionselement (40) weist ein Unterteil (42) und ein Oberteil (43) mit mindestens einem Loch (41) auf.

Weiterhin ist es bevorzugt, dass
i) das mindestens eine Formelement (10) und das mindestens eine Funktionselement (40) formschlüssig miteinander verbunden sind, vorzugsweise nach dem Schlüssel-Schloss-Prinzip, und/oder
ii) das mindestens eine Funktionselement (40) ist mit einem Teilbereich der Unterkonstruktion (30) verbunden, vorzugsweise unter Verwendung von mindestens einem zweiten Befestigungselement (20), insbesondere einer Schraube oder einem Nagel.

In einer weiteren bevorzugten Ausführungsform der vorliegenden Erfindung ist das Schalungssystem (1) derart ausgestaltet, dass auf der Rückseite (4) der Schalhaut (2) mindestens ein erstes Formelement (10) und ein zweites Formelement (10) angebracht sind, wobei
i) das erste und das zweite Formelement (10) jeweils mindestens eine Rastnase (13) aufweisen,
ii) das erste und zweite Formelement (10) auf der Rückseite (4) der Schalhaut (2) spiegelbildlich zueinander angeordnet sind (relativ zur Positionierung der Unterkonstruktion (30)) und
iii) das erste und zweite Formelement (10) reversibel auseinander und zusammengedrückt werden können.

Besonders bevorzugt sind dabei Schalungssysteme (1), bei denen das erste und zweite Formelement (10) unter Ausbildung einer reversiblen oder lösbaren Schnappverbindung am Teilbereich einer Unterkonstruktion (30) oder eines Funktionselements (40) an der Unterkonstruktion (30), befestigt sind, wobei die Unterkonstruktion (30) oder das Funktionselement (40) mindestens eine Aussparung (31/44) aufweisen, in die mindestens eine Rastnase (13) von dem ersten und/oder dem zweiten Formelement (10) unter Ausbildung einer Schnappverbindung einrasten.

Ein weiterer Gegenstand der vorliegenden Erfindung ist die Verwendung einer Anordnung gemäß Anspruch 15, wie vorstehend beschrieben, im Betonbau und zur Herstellung von Bauelementen aus Beton, wobei die Vorderseite (3) der Schalhaut (2) die dem Beton zugewandte Seite des Schalungssystems (1) ist.

Die erfindungsgemäße Anordnung wird nachfolgend anhand der Figuren schematisch verdeutlicht. In einzelnen Figuren sind weiterhin auch Komponenten und/oder Bestandteile des Schalungssystems (1) abgebildet ebenso wie bevorzugte Ausführungsformen und/oder Anwendungsbeispiele des Schalungssystems (1). Außerdem wird auch ein Schalungssystem nach dem Stand der Technik dargestellt. Die in den einzelnen Figuren dargestellten Gegenstände sind in der Regel nicht maßstabsgetreu abgebildet. Dies gilt beispielsweise für die Größe und/oder die Form der Schalhaut (10), insbesondere in

Relation zu Größe, Form und/oder Anzahl des Formelements (10). Es zeigen im Einzelnen:
In **Figur 1** ist ein Schalungssystem (1) abgebildet, dessen Formelement (10) beispielhaft eine spezielle Geometrie aufweist. Beispielhafte Varianten hinsichtlich einer konkreten (speziellen) Ausgestaltung des Formelements (10) sind in den **Figuren 2** **und** **3** dargestellt.
In **Figur 4** ist die erfindungsgemäße Anordnung dargestellt. **Figur 5** entspricht hingegen der Anwendung eines Schalungssystems gemäß dem Stand der Technik.
**Figur 6** zeigt eine Variante der erfindungsgemäßen Anordnung. Eine weitere Variante hierzu ist in der **Figur 7** dargestellt, wobei in dieser Variante zusätzlich ein Funktionselement (40) vorhanden ist.
**Figur 8** ist ein Beispiel für ein solches Funktionselement (40) [Figuren 8a und b]. Weiterhin wird in Figur 8c schematisch ein zugehöriges Schalungssystem (1) dargestellt.
**Figur 9** zeigt eine spezielle Ausgestaltung eines Formelements (10) als solchem in Form eines sogenannten Schwalbenschwanzes. Varianten zu einer konkreten Ausgestaltung eines Formelements (10) als solchem sind in **Figur 10** dargestellt [Figuren 10a und b], inklusive eines jeweils zugehörigen zweiten Befestigungselements (20).
**Figur 11** zeigt wiederum eine erfindungsgemäße Anordnung, mit einer speziellen Anwendung eines Schalungssystems (1) unter Verwendung eines Lochbands (27) als zweites Befestigungselement (20). In **Figur 12** ist eine alternative Ausgestaltung dieses in dieser Ausführungsform eingesetzten Formelements (10) dargestellt.
**Figur 13** zeigt eine weitere Ausführungsform der erfindungsgemäßen Anordnung unter Ausbildung einer Schnappverbindung. Die Schnappverbindung kann entweder direkt mit einer Unterkonstruktion (30) verbunden werden, wie es schematisch in **Figur 14** dargestellt ist, oder die Schnappverbindung kann auch mit einem Funktionselement (40) verbunden werden.

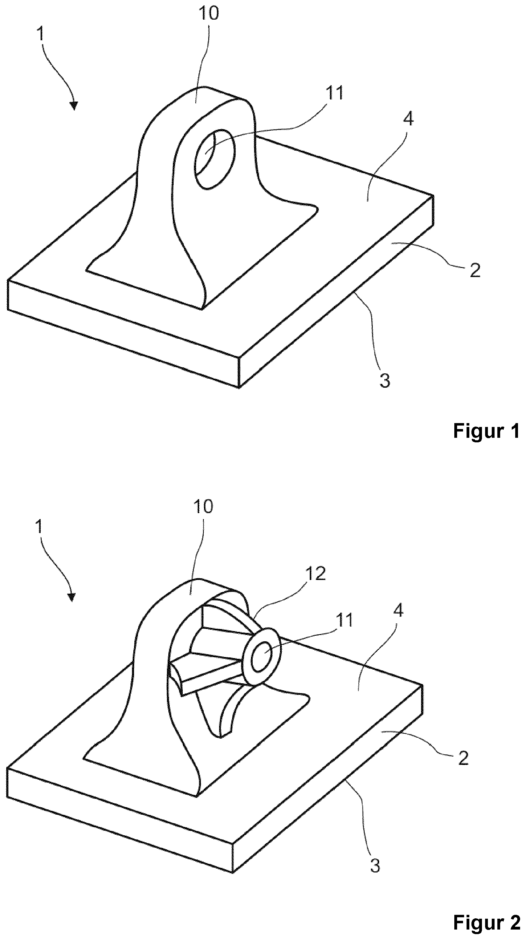

In Figur 1 ist das Schalungssystem (1) einer erfindungsgemäßen Anordnung schematisch in einer ersten Ausführungsform verdeutlicht. Die Schalhaut (2) kann eine beliebige Geometrie aufweisen. Die in Figur 1 dargestellte rechteckförmige Schalhautgeometrie ist nur beispielhaft zu verstehen. Sinngemäßes gilt auch für die Größe (Dimension) der Schalhaut (2). An der Rückseite (4) der Schalhaut (2) ist in der Abbildung gemäß Figur 1 ein Formelement (10) angebracht, das wiederum eine Öffnung (11) aufweist. In der Praxis können auch zwei oder mehrere Formelemente (10) auf der Rückseite (4) der Schalhaut (2) angebracht sein. Die konkrete Anzahl solcher Formelemente (10) an der Rückseite (4) der Schalhaut (2) wird in der Regel von der konkreten Anwendung bestimmt, also der Größe und/oder Geometrie des insbesondere aus Beton herzustellenden Formelements. Die Vorderseite (3) der Schalhaut (2) wird auch als Außenseite oder Betonseite bezeichnet, da sie beispielsweise mit dem bei der konkreten Anwendung verwendeten Mörtel in Kontakt kommt. Die Rückseite (4) wird in der Praxis auch als Innenseite bezeichnet.

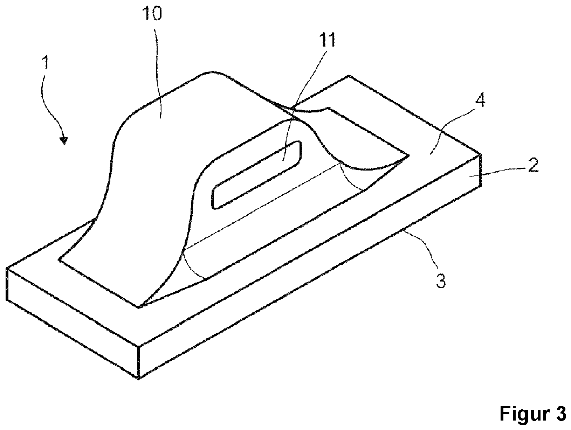

Die im Formelement (10) von Figur 1 dargestellte Öffnung (11) ist dort konkret als (rundes) Loch ausgestaltet. Die Größe und/oder Form/Geometrie der Öffnung (11) können letztendlich beliebig gewählt werden. Sie richten sich in der Regel an der konkreten praktischen Anwendung aus. Sinngemäßes gilt auch für die konkrete Geometrie und/oder Größe des Formelements (10). Varianten zu der beispielhaften Darstellung eines Formelements (10) gemäß Figur 1 und/oder der Öffnung (11) sind in den Figuren 2 und 3 dargestellt. So ist beispielsweise bei dem Formelement gemäß Figur 2 der die Öffnung (11) ausbildende Bereich des Formelements (10) im Vergleich zur entsprechenden Öffnung des Formelements gemäß Figur 1 verlängert worden. Zusätzlich sind an diesem Formelement gemäß Figur 2 im Bereich der Öffnung (11) Verstärkungsrippen (12) angebracht. Die Anzahl und/oder konkrete Geometrie solcher Verstärkungsrippen sind in der Praxis beliebig. Sie dienen vordergründig zur Laststeigerung bei der konkreten Anwendung des erfindungsgemäßen Schalungssystems (1) in der Praxis.

Eine Variante der Geometrie der Öffnung (11) in Form einer schlitzförmigen Öffnung ist in Figur 3 dargestellt. Ebenso ist es möglich, dass das Formelement (10) zwei oder mehrere Öffnungen (11), insbesondere lochförmige Öffnungen, also runde Löcher, aufweist. Solche zusätzlichen Löcher dienen zum Toleranzausgleich.

Bei den in den Figuren 1 bis 3 beispielhaft und schematisch dargestellten Schalungssystemen (1) einer erfindungsgemäßen Anordnung - werden sowohl die Schalhaut (2) als auch das Formelement (10) mit einem 3D-Druckverfahren hergestellt. Die Schalhaut (2) und das mindestens eine Formelement (10) können dabei im Rahmen eines einzigen/gemeinsamen 3D-Druckprozesses hergestellt werden oder auch getrennt voneinander, wobei im Anschluss an das jeweilige 3D-Druckverfahren der Schalhaut (2) das mindestens eine Formelement (10) an die Rückseite (4) der Schalhaut (2) angebracht wird. Vorzugsweise wird im Rahmen der vorliegenden Erfindung das Schalungssystem (1), umfassend eine Schalhaut (2) und mindestens ein Formelement (10), durch einen gemeinsamen 3D-Druckprozess hergestellt. Weiterhin ist es möglich, dass auf der Rückseite (4) der Schalhaut (2) zwei oder mehrere Formelemente (10) von unterschiedlicher Geometrie und/oder Größe angebracht sind.

Ebenso ist es möglich, dass im Fall von zwei oder mehreren Formelementen (10) eine Teilmenge der jeweiligen Formelemente (10) im Rahmen eines gemeinsamen 3D-Druckprozesses mit der Schalhaut (2) hergestellt werden, während eine andere Teilmenge der Formelemente (10) erst im Anschluss an den 3D-Druckprozess der Schalhaut auf die Rückseite (4) der Schalhaut (2) angebracht wird.

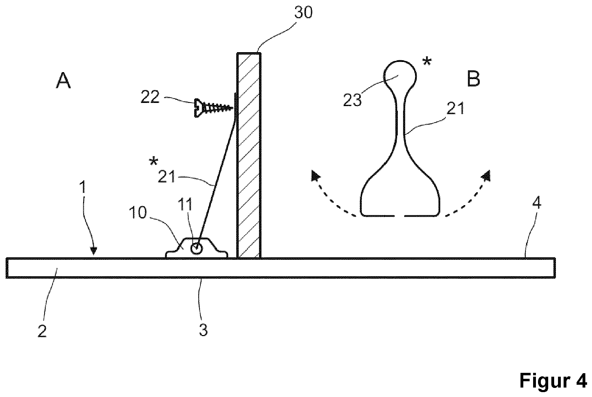

Figur 4 zeigt schematisch eine erfindungsgemäße Anordnung in der Praxis. In Abschnitt A von Figur 4 ist dargestellt, wie das Schalungssystem (1) an der Rückseite (4) der Schalhaut (2) mit einer Unterkonstruktion (30) verbunden wird. Die Unterkonstruktion (30) ist vollständig aus Holz hergestellt. In Figur 4 ist die Unterkonstruktion (30) schematisch nur als ein einzelnes Stück (Teilbereich) dargestellt. In der Praxis umfassen die entsprechenden Unterkonstruktionen in der Regel mehrere solche Elemente, die in beliebiger geometrischer Anordnung miteinander verbunden sein können. Dies bedeutet, dass in der Praxis das Schalungssystem (1) auch an zwei oder mehreren Stellen sinngemäß mit den entsprechenden Bestandteilen der Unterkonstruktion (30) verbunden sein können, wie es beispielhaft in Figur 4 einfach (für einen Teilbereich) dargestellt ist.

Bei der in Figur 4 beispielhaft dargestellten Ausführungsform wird auf der Rückseite (4) der Schalhaut (2) ein Formelement (10) eingesetzt, wie es beispielhaft in Figur 1 dargestellt ist. Durch die runde/lochförmige Öffnung (11) des Formelements (10) wird ein erstes Befestigungselement in Form eines Drahts (21) geführt. Anstelle eines Drahts kann alternativ ein sinngemäßes Befestigungselement wie ein Seil oder ein Stahlband verwendet werden. Dieses erste Befestigungselement (21) ist wiederum durch ein zweites Befestigungselement, im vorliegenden Fall in Form einer Schraube (22), an die Unterkonstruktion (30) angebracht. In Figur 4B ist dieser durch einen Stern gekennzeichnete Ausschnitt von Figur 4A um 90° gedreht schematisch dargestellt. Wie aus Figur 4B anschaulich ersichtlich, kann das erste Befestigungselement, insbesondere der Draht (21), so geformt werden, dass dieser in seinem unteren Bereich von zwei Seiten in die Öffnung (11) des Formelements (10) eingeführt wird. An seinem oberen Ende ist das erste Befestigungselement, insbesondere der Draht (21), so ausgestaltet, beispielsweise in Form eines Schraubenlochs (23), dass er mit dem zweiten Befestigungselement (insbesondere einer Schraube (22)) an der Unterkonstruktion (30) stabil befestigt werden kann. Anstelle einer Schraube (22) kann auch ein anderes geeignetes Befestigungselement, wie beispielsweise ein Nagel, verwendet werden.

Die in Figur 4 dargestellte Variante der einseitigen Befestigung, insbesondere der einseitigen Verschraubung, kann auf einfache Weise auch dahingehend abgeändert werden, dass eine zweiseitige Befestigung, insbesondere eine zweiseitige Verschraubung, des Schalungssystems (2) mit dem entsprechenden Bereich der Unterkonstruktion (30) durchgeführt wird, wobei symmetrisch, vorzugsweise spiegelbildlich, (bezogen auf den in Figur 4 dargestellten Teilbereich der Unterkonstruktion (30)) zum ersten Formelement (10) ein zweites Formelement (20) an der Schalhaut (2) angebracht ist. Die zweite Befestigung wird bei dieser Variante also auf zur ersten Befestigungsseite gegenüberliegenden Seite des Teilbereichs der Unterkonstruktion (30) angebracht.

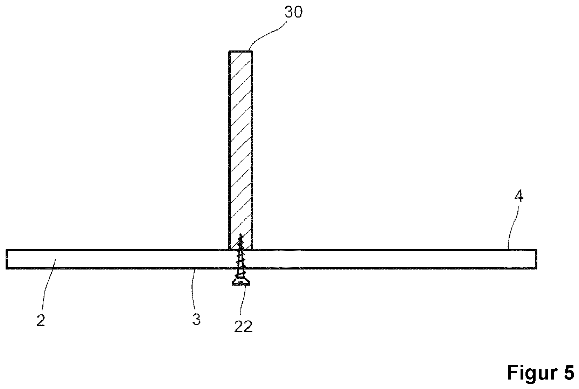

Figur 5 zeigt eine sinngemäße Anwendung eines Schalungssystems gemäß dem Stand der Technik. Das entsprechende Schalungssystem liegt in Teilbereichen seiner Rückseite (also der Innenseite bzw. der dem Beton abgewandten Seite) auf einem Teilbereich der entsprechenden Unterkonstruktion auf bzw. berührt diese. Die Befestigung der Schalhaut gemäß dem Stand der Technik erfolgt in der Regel durch Anbringen eines Befestigungselements, insbesondere einer Schraube (22). Dabei wird das entsprechende Befestigungselement zunächst an der Vorderseite (3), also der Außenseite bzw. Betonseite der Schalhaut (2), so positioniert, dass durch Anwendung einer entsprechenden Kraftbewegung, beispielsweise durch Schrauben, das entsprechende Befestigungselement (22) die Schalhaut (2) über deren gesamte Dicke durchstößt/durchdringt und weiterhin in den an die Schalhaut angrenzenden Teilbereich der Unterkonstruktion (30) eingebracht wird. In der konkreten Ausgestaltung des Stands der Technik gemäß Figur 5 erfolgt dies durch Festschrauben der Schalhaut (2) an der Unterkonstruktion (30) unter Verwendung (von) mindestens einer Schraube (22). Nachteilig an diesem Befestigungsverfahren gemäß dem Stand der Technik ist insbesondere, dass das entsprechende Befestigungselement die jeweilige Schalhaut (2) über deren gesamte Dicke vollständig durchstößt, sodass der Kopf der Schraube (22) auch von der Vorderseite (3) der entsprechenden Schalhaut (2) sichtbar bleibt. Dies hat wiederum zur Folge, dass Teile des Befestigungselements (22), insbesondere der Schraubenkopf, bei der konkreten Anwendung im sogenannten Betonbild sichtbar bleiben.

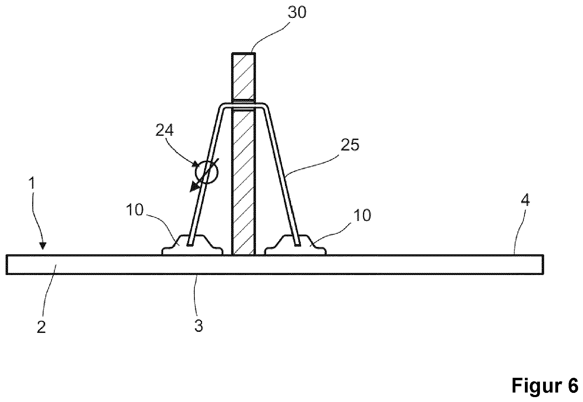

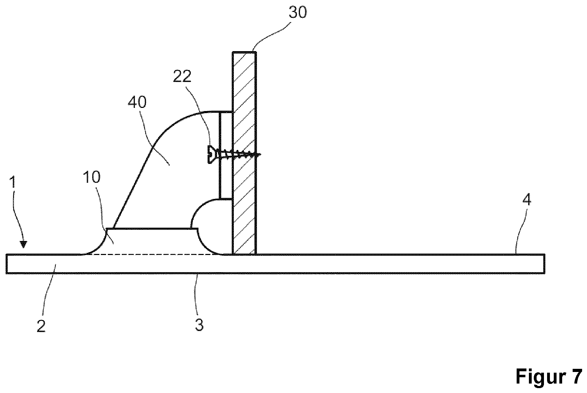

In den Figuren 6 und 7 sind jeweils Varianten (gegenüber Figur 4) der erfindungsgemäßen Anordnung dargestellt. Durch die Ausführungsform gemäß Figur 6 wird eine doppelseitige Verbindung des Schalungssystems (1) mit (einem Teilbereich) der Unterkonstruktion (30) verdeutlicht, die in Folge des symmetrischen Kraftabtrags besonders vorteilhaft ist. Mit dieser Ausführungsform ist es zwingend, dass auf der Rückseite (4) der Schalhaut (2) mindestens zwei Formelemente (10) angebracht sind. Die beiden Formelemente (10) sind auf der Rückseite (4) der Schalhaut (2) vorzugsweise so angebracht, dass sie symmetrisch, vorzugsweise spiegelbildlich, zum (dementsprechenden Teilbereich der) Unterkonstruktion (30) positioniert sind. Wie vorstehend bereits erwähnt, ist die Unterkonstruktion (30) vollständig aus Holz hergestellt, wobei die Unterkonstruktion (30) wiederum selber aus mehreren Fragmenten aufgebaut sein kann, so dass die Unterkonstruktion (30) die Schalhaut (2) an zwei oder mehr Stellen berührt wie es in Figur 6 sinngemäß für einen einzigen Teilbereich der Unterkonstruktion (30) dargestellt ist. Sofern die Unterkonstruktion (30) die Schalhaut (2) in deren Rückseite (4) an zwei oder mehreren Stellen berührt, können die jeweiligen Teilbereiche der Unterkonstruktion (30) ebenfalls mit (mindestens) zwei Formelementen (10), die auf der Rückseite (4) der Schalhaut (2) angebracht sind, verbunden werden. Als Faustregel gilt für diese Ausführungsform, dass für jeden Berührungsbereich der Unterkonstruktion (30) an die Rückseite (4) der Schalhaut (2) dort die doppelte Anzahl an Formelementen (10) angebracht ist.

Die Formelemente (10) können bei dieser Ausführungsform gleich oder verschieden sein, vorzugsweise werden pro Formelementenpaar die gleichen Formelemente (10) eingesetzt. Die in der Ausführungsform gemäß Figur 6 eingesetzten Formelemente (10) können beispielsweise denjenigen Formelementen entsprechen, wie sie beispielhaft in Figur 1 dargestellt sind, also Formelemente (10), die über eine Öffnung (11), insbesondere über ein Loch, verfügen, um ein erstes Befestigungselement wie beispielsweise ein Seil, Draht oder Stahlband durchzuführen. Es können aber auch Formelemente (10) eingesetzt werden, die über keine Öffnung (11) verfügen, da beispielsweise Bänder auch über ein weiteres Befestigungsmittel wie eine Schraube am Formelement (10) befestigt werden können.

In der Ausführungsform gemäß Figur 6 wird als erstes Befestigungselement beispielhaft ein Band (25) eingesetzt, das beispielsweise auch in Form eines Lochbandes ausgestaltet sein kann. Dieses erste Befestigungselement, insbesondere das Band (25), verfügt vorzugsweise auch über ein Spannmechanismus (24), der vorzugsweise unter Verwendung eines Exzenters festgezogen werden kann. Sofern die beiden Formelemente (10) über keine separate Öffnung (11) verfügen, kann das erste Befestigungselement auch unter Verwendung von einem (jeweils) zweiten Befestigungselement, beispielsweise unter Verwendung eines Nagels oder einer Schraube, am jeweiligen Formelement (10) befestigt werden. Die Befestigung an der Unterkonstruktion (30) kann nach jeder dem Fachmann bekannten Art durchgeführt werden. So kann beispielsweise die Unterkonstruktion (30) ebenfalls über eine geeignete Öffnung verfügen, durch die das erste Befestigungselement durchgezogen wird, um eine doppelseitige Verbindung, wie in Figur 6 dargestellt, zu ermöglichen. Alternativ ist es auch möglich, dass die Unterkonstruktion (30) an ihren Seitflächen über geeignete Aussparungen/geometrische Formgebungen verfügt, in die die entsprechenden ersten Befestigungselemente, insbesondere ein Band, formschlüssig eingelegt werden können.

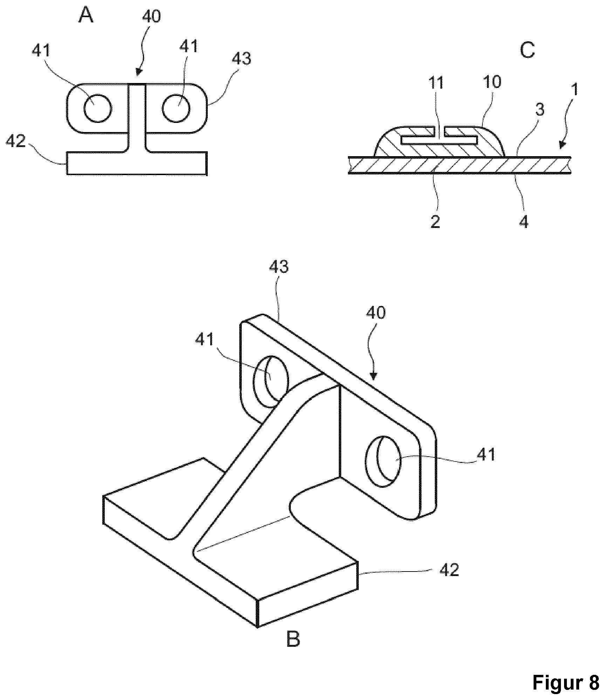

Wie der in Figur 7 dargestellten Ausführungsvariante der vorliegenden Erfindung erfolgt die Verbindung des Schalungssystems (1) an die Unterkonstruktion (30) unter Verwendung von mindestens einem Funktionselement (40). Das Funktionselement (40) wird vorzugsweise unter Verwendung von mindestens einem ersten Befestigungselement, beispielsweise von mindestens einer Schraube (22) auf einer Seite (eines Teilbereichs) der Unterkonstruktion (30) befestigt. Die konkrete Ausgestaltung eines Funktionselements (40) ist beispielhaft in den Figuren 8a und 8b dargestellt (siehe auch die nachfolgenden Ausführungen). Die gestrichelte Linie der Schalhautbegrenzung in der Ausführungsform gemäß Figur 7 deutet an, dass vorzugsweise im Schalungssystem (1) die Schalhaut (2) und das mindestens eine Formelement (10), das an der Rückseite (4) der Schalhaut (2) angebracht ist, durch ein gemeinsames 3D-Druckverfahren hergestellt werden. Wie aus dieser Ausführungsform ersichtlich, ist es nicht zwingend erforderlich, dass das Formelement (10) als solches, über eine Öffnung (11), insbesondere in Form eines Loches, verfügen muss. Beispielsweise ist es möglich, dass das Funktionselement (40) das Formelement (10) berührt und mit Hilfe eines weiteren Befestigungselementes, wie beispielsweise von mindestens einer Schraube (22) an dem Formelement (10) befestigt wird.

Vorzugsweise erfolgt die Verbindung des Funktionselementes (40) mit dem Formelement (10) in der gemäß Figur 7 beschriebenen Ausführungsform der folgenden Erfindung auf die Weise, wie es beispielhaft in Figur 8C dargestellt ist. Dabei verfügt das Formelement (10) über eine entsprechende Öffnung (11), insbesondere in Form einer Aussparung, die hinsichtlich ihrer Geometrie das Gegenstück (im Sinne des Schlüssel-Schloss-Prinzips bzw. Schlüssel-Schloss-Mechanismus) aufweist wie das entsprechende Unterteil (42), das in der Ausführungsform eines Funktionselements (40) gemäß den Figuren 8A und 8B dargestellt ist. Das Formelement (10) und das Funktionselement (40) bilden also gemeinsam einen Formschluss aus. Der Vollständigkeit halber wird angemerkt, dass dieser Formschluss in dieser Ausführungsform gemäß Figur 7 zwar vorhanden ist, aber bildlich nicht dargestellt wurde. Hinsichtlich der konkreten Ausgestaltung dieses Formschlusses wird beispielhaft auf die Abbildung gemäß Figur 8A bis 8C verwiesen.

In der gemäß Figur 7 dargestellten Ausführungsform ist die bevorzugte einseitige Verbindung zwischen Unterkonstruktion (30) und dem Schalungssystem (1) unter Verwendung eines Funktionselementes (40) dargestellt. Alternativ hierzu kann auch eine doppelseitige Verbindung durchgeführt werden, so dass sinngemäß zu der Ausführungsform gemäß Figur 6 symmetrisch, vorzugsweise spiegelbildlich, zum entsprechenden Teilbereich der Unterkonstruktion (30) auf der Rückseite (4) der Schalhaut (2) ein zweites Formelement (10) angebracht ist, das wiederum über ein entsprechendes Funktionselement (40) mit der Unterkonstruktion (30) verbunden ist. Alternativ dazu ist es weiterhin möglich, dass das Funktionselement (40) auch schräg an die Unterkonstruktion (30) angebracht wird, sodass ein Verspannen während des Verschraubungsvorganges möglich ist.

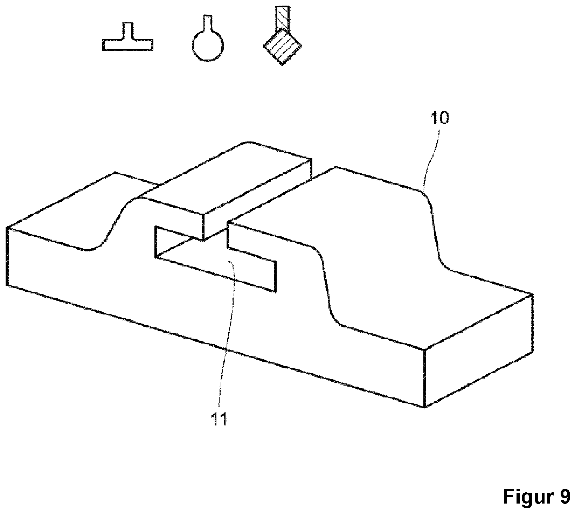

Wie vorstehend bereits erwähnt, zeigen die Figuren 8A und 8B eine bevorzugte Ausführungsform eines Funktionselementes (40), das in der erfindungsgemäßen Ausführungsform gemäß Figur 7 eingesetzt werden kann. Figur 8A ist eine schematische Skizze des Funktionselementes (40) in der Frontalansicht dargestellt, während die Figur 8B eine entsprechende perspektivische Darstellung des Funktionselementes (40) zeigt. Die konkrete Geometrie und/oder Größe des Funktionselementes (40) kann in der Praxis letztendlich beliebig gewählt werden, sie richten sich in der Regel an der konkreten praktischen Anwendung aus. Das in Figur 8 beispielhaft dargestellte Funktionselement (40) verfügt über ein Unterteil (42) sowie ein Oberteil (43). Das Unterteil (42) ist vorzugsweise geometrisch so ausgestaltet, dass es formschlüssig in eine entsprechende Öffnung (11) eines im erfindungsgemäßen Schalungssystems (1) auf der Rückseite (4) der Schalhaut (2) angebrachten Formelement (10) eingebracht werden kann. Dies ist bildlich in Figur 8c dargestellt. Die konkrete geometrische Ausgestaltung des den Formschluss erzeugenden Teilbereichs des Funktionselementes (40) bzw. des entsprechenden Unterteils (42) kann beliebig erfolgen. So ist es denkbar, dass nur Teile des Unterteils (42) formschlüssig in die entsprechende Öffnung (11) eines Formelements (10) eingebracht werden und/oder das am Unterteil (42) weitere geometrische Formen vorhanden sind, die eventuell eine bessere und/oder zusätzliche Verzahnung mit dem Formelement (10) ermöglichen (siehe auch oberer Teil der Figur 9).

Das Funktionselement (40) kann vorzugsweise eine oder mehrere Öffnungen, insbesondere Löcher (41) aufweisen, um beispielsweise unter Verwendung eines geeigneten Befestigungselementes, insbesondere einer Schraube, das entsprechende Funktionselement (40) an der Unterkonstruktion (30) zu befestigen. Vorzugsweise sind solche Öffnungen, insbesondere Löcher (41), im Oberteil (43) des entsprechenden Funktionselementes (40) vorhanden. Vorzugsweise sind diese Öffnungen, insbesondere Löcher (41), symmetrisch zueinander angeordnet. Das Funktionselement (40) kann gegebenenfalls auch durch ein 3-D-Druckverfahren hergestellt werden.

Figur 9 zeigt eine spezielle Ausgestaltung eines Formelements (10) als solches in Form eines sogenannten "Schwalbenschwanzes". In anderen Worten ausgedrückt bedeutet dies, dass das Formelement (10) eine Öffnung (11) aufweist, die eine Aussparung in Form eines Schwalbenschwanzes hat. Durch diese Öffnung (11) des Formelements (10) wird somit eine formschlüssige Bindung mit insbesondere einem Funktionsteil (40) hergestellt, wie es beispielsweise in Figur 8 dargestellt ist. Figur 9 ist prinzipiell eine perspektivische Darstellung des oberen Teiles der Frontansicht gemäß Figur 8C. Im oberen Teil der Figur 9 sind schematisch in der Mitte sowie rechts zwei alternative Ausgestaltungen hinsichtlich möglicher Formschlüsse im Vergleich zur Schwalbenschwanzausgestaltung (Figur 9 links oben) dargestellt. Der Vollständigkeit halber wird darauf hingewiesen, dass in Figur 9 die Schalhaut (2) des Schalungssystems (1) nicht bildlich dargestellt ist, sondern nur das Formelement (10) als solches, das auf der Rückseite (4) der Schalhaut (2) angebracht ist. Das in Figur 9 konkret dargestellte Formelement (10) als solches sowie sämtliche geometrischen Abänderungen davon werden durch ein 3D-Druckverfahren hergestellt und können im Anschluss an das 3D-Druckverfahren auf eine ebenfalls nach einem 3D-Druckverfahren hergestellte Schalhaut (2) auf deren Rückseite (4) angebracht werden. Vorzugsweise werden im Rahmen der vorliegenden Erfindung die im Schalungssystem (1) enthaltene Schalhaut (2) und das mindestens eine Formelement (10) durch einen gemeinsamen 3D-Druckprozess hergestellt (in Figur 9 nicht dargestellt).

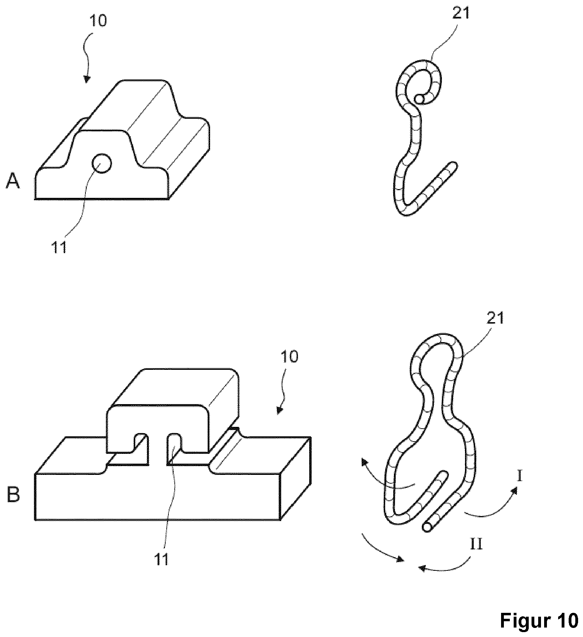

Varianten zu der konkreten geometrischen Ausgestaltung eines Formelements (10) gemäß Figur 9 sind in den Figuren 10A und 10B dargestellt. Das Formelement (10) gemäß Figur 10A weist eine Öffnung (11) auf, die vorzugsweise in Form eines Loches ausgestaltet ist. Durch diese Öffnung (11) kann (ein Teil) eines Befestigungselementes (insbesondere eines Drahtes (21)) gesteckt werden, um das Formelement (10) beispielsweise mit (dem Teil) einer Unterkonstruktion (30) zu verbinden, wie es beispielshaft bereits in Figur 4 dargestellt worden ist. Eine alternative geometrische Anordnung eines Formelementes (10) ist in Figur 8B dargestellt, das zwei Öffnungen (11), vorzugsweise in symmetrischer Anordnung, aufweist, durch die ebenfalls ein Befestigungselement durchgeführt werden kann. Wie auf der rechten Seite von Figur 10B dargestellt, eignet sich als Befestigungselement insbesondere ein Draht, der an seinen beiden Enden jeweils in eine der beiden Öffnungen (11) des Formelements (10) eingeführt wird (Richtung I) bzw. auch wieder ausgeführt werden kann (Richtung II), wie im rechten Teil von Figur 10B bildlich dargestellt.

Alternativ zu Vewendung eines Befestigungselementes, wie in Figur 10A und Figur 10B unter Verwendung eines Drahtes (21) bildlich dargestellt, ist es in der Ausführungsform gemäß Figur 10 auch möglich, dass das entsprechende Formelement (10) unter Verwendung eines Funktionselements (40) sinngemäß zu den in Figuren 7 und 8 dargestellten Ausführungsformen an (einem Teilbereich) einer Unterkonstruktion (30) befestigt wird. Das Funktionselement (40) ist an seiner Unterseite wiederum so ausgestaltet, dass es im Sinne eines Formschlusses (Schlüssel-Schloss-Prinzip) auf die entsprechende Öffnung (11) des jeweiligen Formelementes (10) gemäß den Figuren 10A und 10B formschlüssig abgestimmt ist.

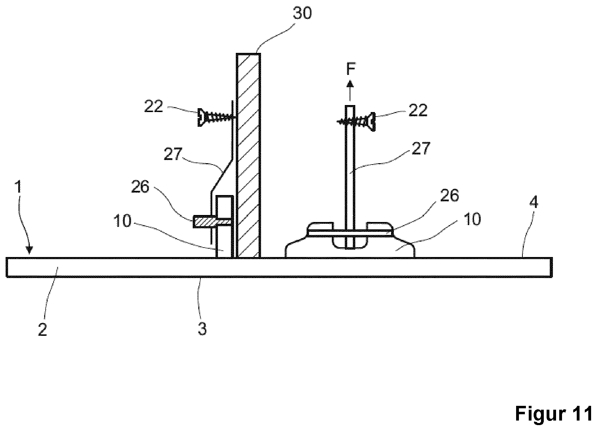

Eine weitere Ausführungsform des Schalungssystems (1) unter Verwendung eines Lochbands (27) als zweites Befestigungselement (20) ist in Figur 11 dargestellt. Figur 11 zeigt eine bevorzugte doppelseitige Verbindung eines Schalungssystems (1), das eine Schalhaut (2) umfasst, wobei auf der Rückseite (4) der Schalhaut (2) mindestens zwei Formelemente (10) angebracht sind. Um das Prinzip der Befestigung des Lochbandes (27) im Rahmen dieser Ausführungsform besser erklären zu können, ist in der Skizze gemäß Figur 11 das Formelement (10) mit einem Winkel von 90° gedreht dargestellt. Vorzugsweise sind die beiden Formelemente (10) symmetrisch zu der Unterkonstruktion (30), insbesondere spiegelbildlich, angeordnet. Das erste Befestigungselement dieser Ausführungsform ist vorzugsweise ein Lochband (27), das wiederum mit einem zweiten Befestigungselement (insbesondere einem Bolzen (26)), der vorzugsweise durch eine oder mehrere Öffnungen (11) des Formelementes (10) sowie des Lochbands (27) geführt wird, an dem Formelement (10) befestigt ist. Im rechten Teil der Abbildung gemäß Figur 11 ist durch die Kraft F angedeutet, dass das Lochband zunächst gestreckt wird, um es mit Hilfe eines weiteren Befestigungselementes, insbesondere einer Schraube (22), an der Unterkonstruktion (30), vorzugsweis ein straffer Form, befestigen zu können. Der linke Teil der Figur 11 zeigt diese Ausführungsform in der geschlossenen/befestigten Form, das heißt, das Schalungssystem (1) ist unter Verwendung eines Lochbandes (27) als erstes Befestigungselement sowie unter Verwendung der zusätzlichen Befestigungselemente Bolzen (26) und Schraube (22) fest an die entsprechende Unterkonstruktion (30) angebunden. Der rechte Teil dieser Ausführungsform gemäß Figur 11 zeigt hingegen den zweiten Teil der doppelseitigen Anbindung im noch unbefestigten Zustand. Selbstverständlich ist es auch möglich, diese Ausführungsform nur in Form einer einseitigen Befestigung durchzuführen. Bei dieser Variante würde also der rechte, derzeit noch unbefestigte Teil von Figur 11 einfach weggelassen werden.

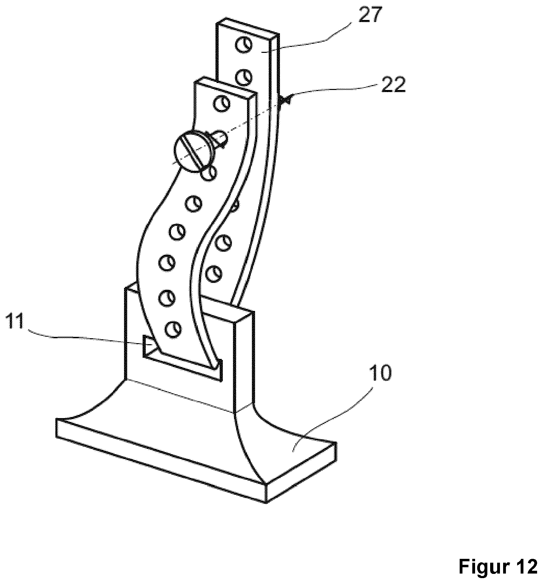

Eine Variante zu der in Figur 11 dargestellten Befestigung mit Hilfe eines Lochbandes ist in Figur 12 dargestellt. Bei dieser Ausführungsform weist das Formelement (10) als Öffnung (11) einen Schlitz auf, durch den das Lochband (27) durchgesteckt wird. Das Lochband (27) wird dabei so angelegt, dass die jeweiligen Enden mit Hilfe eines geeigneten Befestigungselementes, insbesondere einer Schraube (22), miteinander verbunden werden. Auf diese Weise wird das Lochband somit doppelt genommen, was eine Verstärkung der Befestigung bewirkt. Das entsprechende Befestigungselement des Lochbandes, insbesondere die Schraube (22), kann außerdem dazu benutzt werden, um das Lochband (27) gleichzeitig an der Unterkonstruktion (30) anzubringen. Alternativ ist es auch denkbar, das Lochband (27) mit einem separaten Befestigungselement, insbesondere einer weiteren Schraube (22), an der Unterkonstruktion (30) zu befestigen.

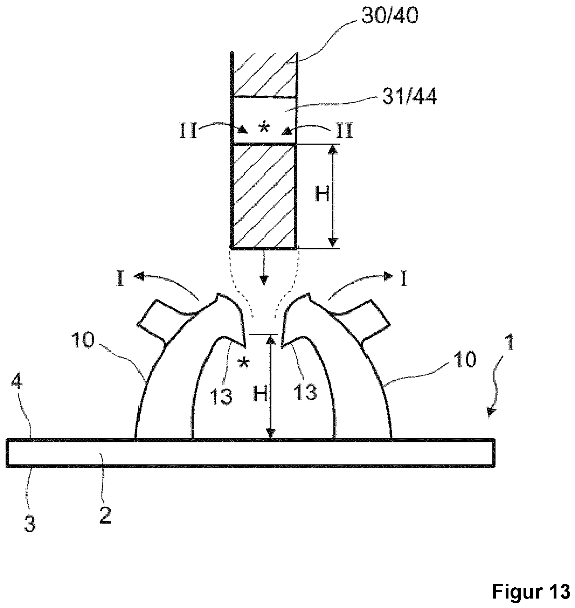

Eine bevorzugte Ausführungsform des Schalungssystems (1) ist in Figur 13 dargestellt. Hierbei handelt es sich um eine sogenannte "Schnappverbindung", insbesondere um eine lösbare Schnappverbindung. In Figur 13 weist das Schalungssystem (1) zwei Formelemente (10) auf, die vorzugsweise eine identische Form und Größe aufweisen. Weiterhin sind die beiden Formelemente (10) symmetrisch, insbesondere spiegelbildlich, in Bezug auf (insbesondere) die Unterkonstruktion (30) auf der Rückseite (4) der Schalhaut (2) angebracht. Die beiden Formelemente (10) sind (zumindest zu einem gewissen Grad) beweglich, weil sie durch einen geeigneten Gegenstand, vorzugsweise durch ein Funktionselement (40) oder eine Unterkonstruktion (30), insbesondere durch eine Unterkonstruktion (30), reversibel auseinandergedrückt werden können. In Figur 13 ist dies durch die Bewegungsrichtung I dargestellt. Vorzugsweise wird das Schalungssystem (1) direkt an (einen Teilbereich) der Unterkonstruktion (30) befestigt, gegebenenfalls kann die Befestigung nach dem gleichen Mechanismus auch an einem Funktionselement (40) erfolgen, das wiederum selbst an einer entsprechenden Unterkonstruktion (30) befestigt wird, wie es vorstehend beispielsweise in Figur 7 dargestellt worden ist. Vorzugsweise erfolgt im Rahmen der vorliegenden Erfindung die Befestigung des Schalungssystems (1) direkt an (einen Teilbereich) der Unterkonstruktion (30). Selbstverständlich ist es möglich, dass das Schalungssystem (1) an zwei oder mehreren Stellen sinngemäß, also an unterschiedlichen Teilbereichen, an der Unterkonstruktion (30) befestigt wird.

Erfindungsgemäß kann das Schalungssystem (1) gegen die Unterkonstruktion (30) oder gegebenenfalls das Funktionselement (40) gedrückt werden. Alternativ kann aber auch die Unterkonstruktion (30) gegen das Schalungssystem (1), so wie in Figur 13 bildlich dargestellt gedrückt werden. Erfindungsgemäß bevorzugt wird das leichtere und/oder beweglichere Teil gegen das schwerere und/oder unbeweglichere Teil gedrückt, wobei in der Praxis häufig die Unterkonstruktion (30) unbeweglicher und/oder schwerer im Vergleich zum Schalungssystem (1) ist. Alternativ ist es auch möglich, dass beide Elemente gleichzeitig gegeneinander gedrückt werden.

Wie aus Figur 13 weiterhin ersichtlich, weist in dieser Ausführungsform die Unterkonstruktion (30) in der Höhe H eine Aussparung (31) auf, in die das Formelement (10) im Sinne einer Schnappverbindung einrasten kann. Die entsprechende Stelle des Formelements (10), die in die Aussparung (31) der Unterkonstruktion (30) einrasten kann, wird auch als Rastnase (13) bzw. Nase oder Vorsprung bezeichnet. Zur Verdeutlichung ist die Funktionsweise des Schnappmechanismus in der Figur 13 im unteren Teil durch den Stern sowie die Bewegungsrichtung I gekennzeichnet, im oberen Teil ebenfalls durch den Stern und durch die Bewegungsrichtung II. An der Positionierung des Sternes im oberen Teil der Figur 13 können sich beispielsweise die beiden Rastnasen (13) der jeweiligen Formelemente (10) berühren.

Aufgrund der relativen Beweglichkeit der beiden Formelemente (10) kann durch eine entsprechende Kraftanstrengung die Schnappverbindung auch wieder gelöst werden, also die Unterkonstruktion (30) aus dem Schalungssystem (1) wieder herausgezogen werden oder andersherum, was eine Wiederverwendbarkeit des jeweiligen Komponenten ermöglicht. Sofern bei dieser Ausführungsform das Schalungssystem (1) mit einem Funktionselement (40) und nicht mit der Unterkonstruktion (30) verbunden werden soll, funktioniert das System sinngemäß. Das Funktionselement (40) hat bei dieser Ausführungsform an der entsprechenden Stelle ebenfalls eine Aussparung (44), die ein sinngemäßes Einrasten der Schnappverbindung ermöglicht.

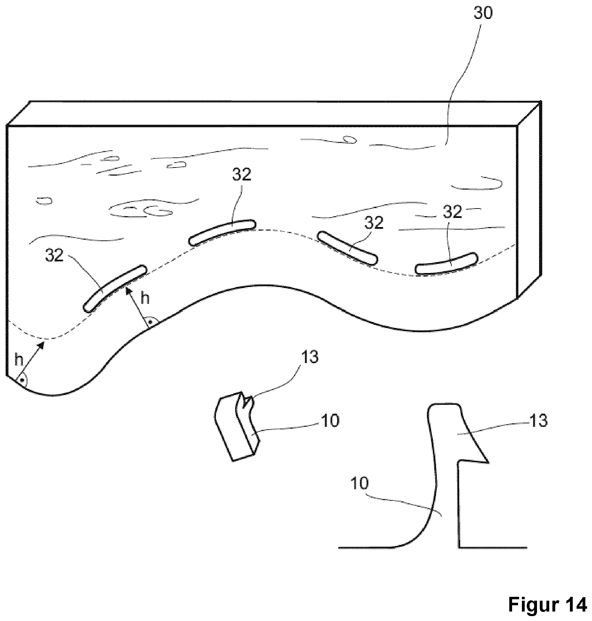

In Figur 14 ist eine Variante/spezielle Ausgestaltung der Schnappverbindung gemäß Figur 13 schematisch dargestellt. Die in der Unterkonstruktion (30) enthaltenen Aussparungen sind in Figur 14 als eingefräste Schlitze (32) dargestellt. Hierbei kann es sich um einen einzelnen eingefrästen Schlitz (32) handeln, ebenso ist es denkbar, dass zwei oder mehrere solcher Schlitze gerade oder in einer sonstigen geometrischen Anordnung in der Unterkonstruktion (30) vorhanden sind. Die Anzahl und/oder Anordnung der eingefrästen Schlitze (32) ist so gewählt, dass sie mit der entsprechenden geometrischen Form des Formelements (10) kompatibel ist. Im unteren Teil, rechts der Figur 14, ist ein Formelement (10) schematisch dargestellt. Mit dessen Rastnase (13) kann das Formelement (10) in dem eingefrästen Schlitz (32) einrasten, insbesondere reversibel einrasten. In Figur 14, unten Mitte, ist dargestellt, wie das Formelement (10) relativ zur Unterkonstruktion (30) zu positionieren ist, damit eine Schnappverbindung, insbesondere in reversibler Form, zwischen dem Schalungssystem (1) über dessen Formelement (10) und der Unterkonstruktion (30) über dessen eingefrästen Schlitz (32) möglich ist.

In Figur 14 sind beispielhaft vier unterschiedliche eingefräste Schlitze in der Unterkonstruktion (30) enthalten. Dies bedeutet, dass in den entsprechenden Stellen sowie unter Berücksichtigung der entsprechenden Geometrie auf dem Schalungssystem (1) das jeweilige Gegenstück im Formelement (10) vorhanden ist, um eine Schnappverbindung zu ermöglichen. Dabei können in der vorliegenden Fallkonstellation an der Rückseite (4) des Schalungssytems (2) vier unterschiedliche Formelemente (10) angebracht sein, die jeweils getrennt voneinander in die entsprechende Anzahl an eingefrästen Schlitzen (32) einrasten. Alternativ ist es auch möglich, dass es sich hierbei um ein einzelnes Formelement (10) handelt, das über vier unterschiedliche Rastnasen (13) verfügt, die an den entsprechenden Stellen in die jeweiligen eingefrästen Schlitze (32) einrasten können. Auf diese Weise kann eine besonders stabile Verbindung hergestellt werden. Alternativ ist es selbstverständlich auch möglich, dass nur an einem der vier schematisch in Figur 14 eingefrästen Schlitze (32) das entsprechende Gegenstück in Form eines Formelements (10) mit einer Rastnase (13) über eine Schnappverbindung einrastet, während an den übrigen eingefrästen Schlitzen (32) keine Befestigung erfolgt. Dies kann beispielsweise dann der Fall sein, wenn die entsprechenden Unterkonstruktionsteile (30) in sehr großer Stückzahl produziert werden und eine genaue Positionierung der Verbindung mit dem Formelement (10) möglichst variabel gestaltet werden soll.

Im Falle der Ausführungsformen gemäß Figur 13 und insbesondere Figur 14 ist es vom technischen Standpunkt her auch möglich, dass nur eine einseitige Schnappverbindung erfolgt. Vorzugsweise wird in der Praxis diese Ausführungsform allerdings mit einer doppelseitigen Schnappverbindung wie in Figur 13 dargestellt durchgeführt, weil auf diese Weise die Unterkonstruktion (30) oder gegebenenfalls ein Funktionselement (40) stabiler (im Vergleich zu einer reinen einseitigen Schnappverbindung) mit dem Schalungssystem (1) verbunden werden kann. Die einseitige Schnappverbindung kann aber dann wichtig werden, wenn verschiedene Befestigungsarten miteinander kombiniert werden. Beispielsweise kann über das einfache Einrasten zunächst eine korrekte Positionierung der Schalhaut (2) auf der Unterkonstruktion (30) sichergestellt werden. Danach wird dann mit Elementen, die höhere Kräfte aufbauen können (z.B. Lochband), die eigentliche, wesentlich steifere und stabilere Positionierung gewährleistet.

### Bezugszeichenliste

- 1: Schalungssystem
- 2: Schalhaut
- 3: Vorderseite (der Schalhaut)
- 4: Rückseite (der Schalhaut)
- 10: Formelement
- 11: Öffnung
- 12: Verstärkungsrippen
- 13: Rastnase
- 20: zweites Befestigungselement (beispielsweise zum Anbringen des Formelements an die Unterkonstruktion)
- 21: Draht
- 22: Schraube
- 23: Schraubenloch
- 24: Spannmechanismus
- 25: Band
- 26: Bolzen
- 27: Lochband
- 30: Unterkonstruktion
- 31: Aussparung
- 32: (eingefräste) Schlitze
- 40: Funktionselement
- 41: Loch
- 42: Unterteil
- 43: Oberteil
- 44: Aussparung
- 50: erstes Befestigungselement (beispielsweise zum Anbringen des Formelements an die Schalhaut)

## Patentansprüche

1. Anordnung aus einem Schalungssystem (1) zur Herstellung von Bauelementen aus Beton und einer Unterkonstruktion (30), wobei das Schalungssystem (1)
- eine Schalhaut (2), die eine Vorderseite (3) und eine Rückseite (4) aufweist,
- mindestens ein Formelement (10), das an der Rückseite (4) der Schalhaut (2) angebracht ist, umfasst,
wobei i) die Schalhaut (2) und das Formelement (10) mit einem 3D-Druckverfahren hergestellt worden sind, ii) das Formelement (10) gegebenenfalls unter Verwendung von mindestens einem ersten Befestigungselement (50) an der Rückseite (4) der Schalhaut (2) angebracht ist und iii) das Formelement (10) und gegebenenfalls das erste Befestigungselement (50) so an der Rückseite (4) der Schalhaut (2) angebracht sind, dass das Formelement (10) und das gegebenenfalls verwendete erste Befestigungselement (50) die Vorderseite (3) der Schalhaut (2) nicht berühren oder durchstoßen, wobei das Schalungssystem (1) unter Verwendung von mindestens einem zweiten Befestigungselement (20) an mindestens einem Teilbereich der Unterkonstruktion (30) befestigt ist, wobei die Unterkonstruktion (30) vollständig aus Holz hergestellt ist.

2. Anordnung (1) gemäß Anspruch 1, **dadurch gekennzeichnet, dass** die Schalhaut (2) und das mindestens eine Formelement (10) in einem gemeinsamen 3D-Druckprozess hergestellt worden sind.

3. Anordnung (1) gemäß Anspruch 1, **dadurch gekennzeichnet, dass** die Schalhaut (2) und das mindestens eine Formelement (10) jeweils in getrennten 3D-Druckprozessen hergestellt worden sind und das Formelement (10) unter Verwendung von mindestens einem ersten Befestigungselement (50) anschließend an der Rückseite (4) der Schalhaut (2) angebracht wird.

4. Anordnung (1) gemäß Anspruch 3, **dadurch gekennzeichnet, dass** das mindestens eine Formelement (10) durch Verkleben, Verschrauben, Vernageln und/oder Vernieten auf der Rückseite (4) der Schalhaut (2) angebracht wird und/oder als erstes Befestigungselement (50) Klebstoff, Schrauben, Nägel und/oder Nieten verwendet werden.

5. Anordnung (1) gemäß einem der Ansprüche 1 bis 4, **dadurch gekennzeichnet, dass** das mindestens eine Formelement (10)
i) mindestens eine Öffnung (11), vorzugsweise in Form eines runden Lochs, eines Schlitzes oder einer Aussparung aufweist, und/oder
ii) mindestens eine Rastnase (13) aufweist, und/oder
iii) mindestens eine Verstärkungsrippe (12) aufweist.

6. Anordnung (1) gemäß einem der Ansprüche 1 bis 5, **dadurch gekennzeichnet, dass** die Unterkonstruktion (30) eine Holzgitterkonstruktion oder eine Knaggenkonstruktion ist.

7. Anordnung (1) gemäß Anspruch 1, **dadurch gekennzeichnet, dass** mindestens ein Formelement (10) mindestens eine Öffnung (11), vorzugsweise ein rundes Loch oder einen Schlitz, aufweist und mindestens ein erstes zweites Befestigungselement (20), vorzugsweise ein Draht (21), ein Seil oder ein Stahlband, insbesondere ein Draht (21), mit einem Teilbereich in die Öffnung (11) eingelegt oder teilweise durchgezogen wird und das erste zweite Befestigungselement (20) mit einem anderen Teilbereich unter Verwendung von mindestens einem zweiten zweiten Befestigungselement (20), vorzugsweise einer Schraube oder einem Nagel, an der Unterkonstruktion (30) befestigt ist.

8. Anordnung (1) gemäß Anspruch 1, **dadurch gekennzeichnet, dass** mindestens ein Formelement (10) mindestens eine Öffnung (11) aufweist und das Formelement (10) unter Verwendung von mindestens einem ersten zweiten Befestigungselement (20) an der Unterkonstruktion (30) befestigt ist, wobei
i) das erste zweite Befestigungselement (20) gegebenenfalls unter Verwendung von mindestens einem zweiten zweiten Befestigungselement (20), vorzugsweise einer Schraube (22) oder eines Nagels, an der Unterkonstruktion (30) befestigt ist, und/oder
ii) das erste zweite Befestigungselement (20) vorzugsweise ein Lochband (27) ist und das Lochband (27) gegebenenfalls unter Verwendung eines Bolzens (26) am Formelement (10) befestigt ist.

9. Anordnung (1) gemäß Anspruch 1, **dadurch gekennzeichnet, dass** auf der Rückseite (4) der Schalhaut (2) mindestens ein erstes Formelement (10) und ein zweites Formelement (10) angebracht sind, die eine doppelseitige Verbindung mit einem Teilbereich der Unterkonstruktion (30) herstellt, wobei vorzugsweise die Anordnung von erstem zu zweitem Formelement (10) symmetrisch, vorzugsweise spiegelbildlich, relativ zur Positionierung der Unterkonstruktion (30) ist.

10. Anordnung (1) gemäß Anspruch 9, **dadurch gekennzeichnet, dass** das erste und zweite Formelement (10) jeweils mit einem Teilbereich eines einzelnen zweiten Befestigungselements (20) verbunden ist und ein weiterer Teilbereich dieses zweiten Befestigungselements (20) an der Unterkonstruktion (30) befestigt ist, wobei vorzugsweise
i) die Unterkonstruktion (30) mindestens eine Öffnung und/oder Aussparung aufweist, durch die das zweite Befestigungselement (20) durchgezogen oder teilweise eingelegt ist, und/oder
ii) das zweite Befestigungselement (20) ein Band, Seil oder Lochband ist, und/oder
iii) das zweite Befestigungselement (20) zusätzlich über einen Spannmechanismus (24), insbesondere über einen Exzenter, verfügt.

11. Anordnung (1) gemäß Anspruch 1, **dadurch gekennzeichnet, dass** mindestens ein Formelement (10) mit einem Funktionselement (40) verbunden ist, vorzugsweise weist das Formelement (10) mindestens eine Öffnung (11) auf, mehr bevorzugt ist die Öffnung (11) in Form einer Aussparung, insbesondere in Form eines Schwalbenschwanzes, und/oder das Funktionselement (40) weist ein Unterteil (42) und ein Oberteil (43) mit mindestens einem Loch (41) auf.

12. Anordnung (1) gemäß Anspruch 11, **dadurch gekennzeichnet, dass**
i) das mindestens eine Formelement (10) und das mindestens eine Funktionselement (40) formschlüssig miteinander verbunden sind, vorzugsweise nach dem Schlüssel-Schloss-Prinzip, und/oder
ii) das mindestens eine Funktionselement (40) mit einem Teilbereich der Unterkonstruktion (30) verbunden ist, vorzugsweise unter Verwendung von mindestens einem zweiten Befestigungselement (20), insbesondere einer Schraube oder einem Nagel.

13. Anordnung (1) gemäß Anspruch 1, **dadurch gekennzeichnet, dass** auf der Rückseite (4) der Schalhaut (2) mindestens ein erstes Formelement (10) und ein zweites Formelement (10) angebracht sind, wobei
i) das erste und das zweite Formelement (10) jeweils mindestens eine Rastnase (13) aufweisen,
ii) das erste und zweite Formelement (10) auf der Rückseite (4) der Schalhaut (2) spiegelbildlich zueinander angeordnet sind (relativ zur Positionierung der Unterkonstruktion (30)) und
iii) das erste und zweite Formelement (10) reversibel auseinander und zusammengedrückt werden können.

14. Anordnung (1) gemäß Anspruch 13, **dadurch gekennzeichnet, dass** das erste und zweite Formelement (10) unter Ausbildung einer reversiblen oder lösbaren Schnappverbindung am Teilbereich der Unterkonstruktion (30) oder eines Funktionselements (40), vorzugsweise an der Unterkonstruktion (30), befestigt sind, wobei die Unterkonstruktion (30) oder das Funktionselement (40) mindestens eine Aussparung (31/44) aufweisen, in die mindestens eine Rastnase (13) von dem ersten und/oder dem zweiten Formelement (10) unter Ausbildung einer Schnappverbindung einrastet.

15. Verwendung einer Anordnung gemäß einem der Ansprüche 1 bis 14 im Betonbau und zur Herstellung von Bauelementen aus Beton, wobei die Vorderseite (3) der Schalhaut (2) die dem Beton zugewandte Seite des Schalungssystems (1) ist.

## Claims

1. An arrangement composed of a formwork system (1) for producing structural elements made of concrete and of a substructure (30), the formwork system (1) comprising
- a form lining (2) which has a front side (3) and a rear side (4),
- at least one shaped element (10) which is attached to the rear side (4) of the form lining (2),
wherein i) the form lining (2) and the shaped element (10) have been produced using a 3D printing method, ii) the shaped element (10) is attached to the rear side (4) of the form lining (2) optionally using at least one first fastening element (50), and iii) the shaped element (10) and optionally the first fastening element (50) are attached to the rear side (4) of the form lining (2) in such a way that the shaped element (10) and the optionally used first fastening element (50) do not touch or pierce the front side (3) of the form lining (2), wherein the formwork system (1) is fastened to at least one subregion of the substructure (30) using at least one second fastening element (20), wherein the substructure (30) is completely produced from wood.

2. The arrangement (1) according to claim 1, wherein the form lining (2) and the at least one shaped element (10) have been produced in a common 3D printing process.

3. The arrangement (1) according to claim 1, wherein the form lining (2) and the at least one shaped element (10) have each been produced in separate 3D printing processes, and the shaped element (10) is then attached to the rear side (4) of the form lining (2) using at least one first fastening element (50).

4. The arrangement (1) according to claim 3, wherein the at least one shaped element (10) is attached to the rear side (4) of the form lining (2) by adhesive bonding, screwing, nailing and/or riveting, and/or, as first fastening element (50), adhesive, screws, nails and/or rivets are used.

5. The arrangement (1) according to one of claims 1 to 4, wherein the at least one shaped element (10)
i) has at least one opening (11), preferably in the form of a round hole, a slot or a cutout, and/or
ii) has at least one latching lug (13), and/or
iii) has at least one reinforcing rib (12).

6. The arrangement (1) according to one of claims 1 to 5, wherein the substructure (30) is a wooden lattice construction or a cleat construction.

7. The arrangement (1) according to claim 1, wherein at least one shaped element (10) has at least one opening (11), preferably a round hole or a slot, and at least one first second fastening element (20), preferably a wire (21), a cable or a steel strip, in particular a wire (21), is inserted, by way of one subregion thereof, into the opening (11) or partially pulled through, and the first second fastening element (20) is fastened, by way of another subregion thereof, to the substructure (30) using at least one second second fastening element (20), preferably a screw or a nail.

8. The arrangement (1) according to claim 1, wherein at least one shaped element (10) has at least one opening (11), and the shaped element (10) is fastened to the substructure (30) using at least one first second fastening element (20), wherein
i) the first second fastening element (20) is fastened to the substructure (30) optionally using at least one second second fastening element (20), preferably a screw (22) or a nail, and/or
ii) the first second fastening element (20) is preferably a perforated strip (27), and the perforated strip (27) is fastened to the shaped element (10) optionally using a bolt (26).

9. The arrangement (1) according to claim 1, wherein at least one first shaped element (10) and one second shaped element (10) are attached to the rear side (4) of the form lining (2) and establish a double-sided connection to a subregion of the substructure (30), wherein preferably the arrangement of the first with respect to the second shaped element (10) is symmetrical, preferably mirror-inverted, relative to the positioning of the substructure (30).

10. The arrangement (1) according to claim 9, wherein the first and second shaped element (10) are each connected to a subregion of a single second fastening element (20), and a further subregion of said second fastening element (20) is fastened to the substructure (30), wherein preferably
i) the substructure (30) has at least one opening and/or cutout through which the second fastening element (20) is pulled or partially inserted, and/or
ii) the second fastening element (20) is a strip, cable or perforated strip, and/or
iii) the second fastening element (20) additionally has a tensioning mechanism (24), in particular an eccentric.

11. The arrangement (1) according to claim 1, wherein at least one shaped element (10) is connected to a functional element (40), it preferably being the case that the shaped element (10) has at least one opening (11), it more preferably being the case that the opening (11) is in the form of a cutout, in particular in the form of a dovetail, and/or the functional element (40) has a lower part (42) and an upper part (43) with at least one hole (41).

12. The arrangement (1) according to claim 11, wherein
i) the at least one shaped element (10) and the at least one functional element (40) are connected to one another in a form-fitting manner, preferably according to the key-lock principle, and/or
ii) the at least one functional element (40) is connected to a subregion of the substructure (30), preferably using at least one second fastening element (20), in particular a screw or a nail.

13. The arrangement (1) according to claim 1, wherein at least one first shaped element (10) and one second shaped element (10) are attached to the rear side (4) of the form lining (2), wherein
i) the first and the second shaped element (10) each have at least one latching lug (13),
ii) the first and second shaped element (10) are arranged on the rear side (4) of the form lining (2) so as to be mirror-inverted with respect to one another (relative to the positioning of the substructure (30)), and
iii) the first and second shaped element (10) can be reversibly pressed apart and pressed together.

14. The arrangement (1) according to claim 13, wherein the first and second shaped element (10) are fastened to the subregion of the substructure (30) or of a functional element (40), preferably to the substructure (30), with formation of a reversible or detachable snap-action connection, wherein the substructure (30) or the functional element (40) has at least one cutout (31/44) into which at least one latching lug (13) of the first and/or the second shaped element (10) latches with formation of a snap-action connection.

15. The use of an arrangement according to one of claims 1 to 14 in concrete construction and for producing structural elements made of concrete, wherein the front side (3) of the form lining (2) is that side of the formwork system (1) which faces the concrete.

## Revendications

1. Agencement composé d'un système de coffrage (1) pour la fabrication d'éléments de construction en béton et d'une sous-structure (30), le système de coffrage (1) comprenant :
- une peau de coffrage (2), qui présente un côté avant (3) et un côté arrière (4),
- au moins un élément de moulage (10), qui est monté sur le côté arrière (4) de la peau de coffrage (2),
i) la peau de coffrage (2) et l'élément de moulage (10) ayant été fabriqués par un procédé d'impression 3D, ii) l'élément de moulage (10) étant monté sur le côté arrière (4) de la peau de coffrage (2), éventuellement en utilisant au moins un premier élément de fixation (50), et iii) l'élément de moulage (10) et éventuellement le premier élément de fixation (50) étant montés sur le côté arrière (4) de la peau de coffrage (2) de telle sorte que l'élément de moulage (10) et le premier élément de fixation (50) éventuellement utilisé ne touchent pas ou ne traversent pas le côté avant (3) de la peau de coffrage (2), le système de coffrage (1) étant fixé à au moins une zone partielle de la sous-structure (30) en utilisant au moins un deuxième élément de fixation (20), la sous-structure (30) étant entièrement fabriquée en bois.

2. Agencement (1) selon la revendication 1, **caractérisé en ce que** la peau de coffrage (2) et l'au moins un élément de moulage (10) ont été fabriqués dans un processus d'impression 3D commun.

3. Agencement (1) selon la revendication 1, **caractérisé en ce que** la peau de coffrage (2) et l'au moins un élément de moulage (10) ont été respectivement fabriqués dans des processus d'impression 3D séparés et l'élément de moulage (10) est ensuite monté sur le côté arrière (4) de la peau de coffrage (2) en utilisant au moins un premier élément de fixation (50).

4. Agencement (1) selon la revendication 3, **caractérisé en ce que** l'au moins un élément de moulage (10) est monté par collage, vissage, clouage et/ou rivetage sur le côté arrière (4) de la peau de coffrage (2) et/ou de la colle, des vis, des clous et/ou des rivets sont utilisés en tant que premier élément de fixation (50).

5. Agencement (1) selon l'une quelconque des revendications 1 à 4, **caractérisé en ce que** l'au moins un élément de moulage (10)
i) présente au moins une ouverture (11), de préférence sous la forme d'un trou rond, d'une fente ou d'un évidement, et/ou
ii) présente au moins un bec d'encliquetage (13), et/ou
iii) présente au moins une nervure de renforcement (12).

6. Agencement (1) selon l'une quelconque des revendications 1 à 5, **caractérisé en ce que** la sous-structure (30) est une structure en treillis de bois ou une structure à tasseaux.

7. Agencement (1) selon la revendication 1, **caractérisé en ce qu'**au moins un élément de moulage (10) présente au moins une ouverture (11), de préférence un trou rond ou une fente, et au moins un premier deuxième élément de fixation (20), de préférence un fil (21), un câble ou une bande d'acier, notamment un fil (21), est inséré ou partiellement tiré à travers l'ouverture (11) par une zone partielle et le premier deuxième élément de fixation (20) est fixé à la sous-structure (30) par une autre zone partielle en utilisant au moins un deuxième deuxième élément de fixation (20), de préférence une vis ou un clou.

8. Agencement (1) selon la revendication 1, **caractérisé en ce qu'**au moins un élément de moulage (10) présente au moins une ouverture (11) et l'élément de moulage (10) est fixé à la sous-structure (30) en utilisant au moins un premier deuxième élément de fixation (20),
i) le premier deuxième élément de fixation (20) étant fixée à la sous-structure (30), éventuellement en utilisant au moins un deuxième deuxième élément de fixation (20), de préférence une vis (22) ou un clou, et/ou
ii) le premier deuxième élément de fixation (20) étant de préférence une bande perforée (27) et la bande perforée (27) étant fixée à l'élément de moulage (10), éventuellement en utilisant un boulon (26).

9. Agencement (1) selon la revendication 1, **caractérisé en ce qu'**au moins un premier élément de moulage (10) et un deuxième élément de moulage (10) sont montés sur le côté arrière (4) de la peau de coffrage (2), qui réalise une liaison bilatérale avec une zone partielle de la sous-structure (30), l'agencement du premier par rapport au deuxième élément de moulage (10) étant de préférence symétrique, de préférence en miroir, par rapport au positionnement de la sous-structure (30).

10. Agencement (1) selon la revendication 9, **caractérisé en ce que** le premier et le deuxième élément de moulage (10) sont respectivement reliés à une zone partielle d'un deuxième élément de fixation (20) unique et une autre zone partielle de ce deuxième élément de fixation (20) est fixée à la sous-structure (30), de préférence
i) la sous-structure (30) présentant au moins une ouverture et/ou un évidement à travers lequel le deuxième élément de fixation (20) est tiré ou partiellement inséré, et/ou
ii) le deuxième élément de fixation (20) étant une bande, un câble ou une bande perforée, et/ou
iii) le deuxième élément de fixation (20) disposant en outre d'un mécanisme de tension (24), notamment d'un excentrique.

11. Agencement (1) selon la revendication 1, **caractérisé en ce qu'**au moins un élément de moulage (10) est relié à un élément fonctionnel (40), l'élément de moulage (10) présentant de préférence au moins une ouverture (11), l'ouverture (11) étant plus préférentiellement sous la forme d'un évidement, notamment sous la forme d'une queue d'aronde, et/ou l'élément fonctionnel (40) présentant une partie inférieure (42) et une partie supérieure (43) avec au moins un trou (41).

12. Agencement (1) selon la revendication 11, **caractérisé en ce que**
i) l'au moins un élément de moulage (10) et l'au moins un élément fonctionnel (40) sont reliés entre eux par complémentarité de forme, de préférence selon le principe clé-serrure, et/ou
ii) l'au moins un élément fonctionnel (40) est relié à une zone partielle de la sous-structure (30), de préférence en utilisant au moins un deuxième élément de fixation (20), notamment une vis ou un clou.

13. Agencement (1) selon la revendication 1, **caractérisé en ce qu'**au moins un premier élément de moulage (10) et un deuxième élément de moulage (10) sont montés sur le côté arrière (4) de la peau de coffrage (2),
i) le premier et le deuxième élément de moulage (10) présentant chacun au moins un bec d'encliquetage (13),
ii) le premier et le deuxième élément de moulage (10) étant agencés sur le côté arrière (4) de la peau de coffrage (2) en miroir l'un par rapport à l'autre (par rapport au positionnement de la sous-structure (30)) et
iii) le premier et le deuxième élément de moulage (10) pouvant être écartés l'un de l'autre et pressés l'un contre l'autre de manière réversible.

14. Agencement (1) selon la revendication 13, **caractérisé en ce que** le premier et le deuxième élément de moulage (10) sont fixés, en formant un assemblage par enclenchement réversible ou détachable, sur la zone partielle de la sous-structure (30) ou d'un élément fonctionnel (40), de préférence sur la sous-structure (30), la sous-structure (30) ou l'élément fonctionnel (40) présentant au moins un évidement (31/44) dans lequel s'encliquète au moins un bec d'encliquetage (13) du premier et/ou du deuxième élément de moulage (10) en formant un assemblage par enclenchement.

15. Utilisation d'un agencement selon l'une quelconque des revendications 1 à 14 dans la construction en béton et pour la fabrication d'éléments de construction en béton, le côté avant (3) de la peau de coffrage (2) étant le côté du système de coffrage (1) tourné vers le béton.
